# EUROPEAN PATENT APPLICATION

(11) **EP 4 679 315 A1**
(43) Date of publication of application: **14.01.2026**
(21) Application number: 23934103.5
(22) Date of filing: 21.04.2023
(51) Int. Cl.: G06F 40/295

(54) **LEARNING DEVICE, ESTIMATION DEVICE, PROGRAM, LEARNING METHOD, AND ESTIMATION METHOD**

(71) Applicant: MITSUBISHI ELECTRIC CORPORATION, Chiyoda-ku Tokyo 100-8310 (JP)
(72) Inventor: AIKAWA, Takeyuki, Tokyo 100-8310 (JP); SHIRAFUJI, Daiki, Tokyo 100-8310 (JP); UCHIDE, Hayato, Tokyo 100-8310 (JP); ITSUI, Hiroyasu, Tokyo 100-8310 (JP)
(74) Representative: Pfenning, Meinig & Partner mbB
(86) International application number: PCT/JP2023/015902
(87) International publication number: WO 2024/218960

(57) **Abstract**

A training device (110) includes: a quantitative-expression specifying unit (112) that specifies a quantitative expression that expresses a quantity using a numerical value and a unit from the training source data; a numerical-value normalizing unit (113) that normalizes the numerical value; a unit normalizing unit (115) that normalizes the unit; a unit detailing unit (117) that specifies a target, which is a physical entity, and an attribute, which is the property of the target and indicated by a numerical value and a unit, in the training source data, and converts a normalized unit into a detailed unit uniquely corresponding to a combination of the specified target, the specified attribute, and the normalized unit; and a quantitative-expression training unit (118) that trains a quantitative-representation language model for estimating normalized numerical values by using data including detailed units and normalized numerical values.

## Description

### TECHNICAL FIELD

The disclosure relates to a training device, an estimation device, a program, a training method, and an estimation method.

### BACKGROUND ART

Conventionally, there has been a need to search quantitative expressions contained in document data and other data in some cases, such as the case where product specifications are compared during consumer purchasing decisions, component procurement in manufacturing, or automated determinations of conformity with standards or criteria; or the case where similar specifications are searched for when a customer or salesperson inputs required specifications to search for past similar products, or when the specifications of in-house products are input to create comparison tables with similar products from other companies.

In response to such a need, for example, PTL 1 describes a device that extracts numerical values as quantities, rather than as unknown words, for learning in a method where embedding vectors are learned from text using a neural network.

### PRIOR ART REFERENCE

### PATENT REFERENCE

Patent Literature 1: Japanese Patent Application No. 2021-149935

### SUMMARY OF THE INVENTION

### PROBLEM TO BE SOLVED BY THE INVENTION

Large amounts of document data are often used for training during pre-training of a model; however, there are cases where a certain physical quantity is used with the same unit for different attributes of different targets. In such a case, the distribution of numerical values varies greatly depending on the targets and attributes; therefore, to train a model to have high accuracy, it is necessary to take into account these differences in distribution during training.

However, conventional techniques do not take into account the differences in distribution for each target and attribute.

Accordingly, an object of one or more aspects of the disclosure is to enable training and estimation while the differences in distribution for each target and attribute are taken into account.

### MEANS OF SOLVING THE PROBLEM

A training device according to an aspect of the disclosure includes: a quantitative-expression specifying unit configured to specify a quantitative expression expressing a quantity using a numerical value and a unit from training source data; a numerical-value normalizing unit configured to normalize the numerical value; a unit normalizing unit configured to normalize the unit; a unit detailing unit configured to specify a target being a physical entity and an attribute indicated by the numerical value and the unit in the training source data, and to convert the normalized unit into a detailed unit uniquely corresponding to a combination of the specified target, the specified attribute, and the normalized unit, the attribute being a property of the target; and a quantitative-expression training unit configured to train a quantitative-representation language model for estimating the normalized numerical values by using data including the detailed unit and the normalized numerical value.

An estimation device according to an aspect of the disclosure includes: an estimated-target-data acquiring unit configured to acquire estimated target data requiring estimation of a numerical value at a position where a predetermined representation format is arranged by using the predetermined expression format and a unit; a unit normalizing unit configured to normalize the unit; a unit detailing unit configured to specify a target being a physical entity and an attribute indicated by the predetermined expression format and the unit in the estimated target data, and to convert the normalized unit into a detailed unit uniquely corresponding to a combination of the specified target, the specified attribute, and the normalized unit, the attribute being a property of the target; and a quantitative-expression estimating unit configured to input data including the predetermined expression format and the converted detailed unit into a quantitative-representation language model trained by using data including the detailed unit and the normalized numerical value, to estimate the numerical value at the position where the predetermined expression format is positioned.

A program according to a first aspect of the disclosure causing a computer to function as: a quantitative-expression specifying unit configured to specify a quantitative expression expressing a quantity using a numerical value and a unit from training source data; a numerical-value normalizing unit configured to normalize the numerical value; a unit normalizing unit configured to normalize the unit; a unit detailing unit configured to specify a target being a physical entity and an attribute indicated by the numerical value and the unit in the training source data, and to convert the normalized unit into a detailed unit uniquely corresponding to a combination of the specified target, the specified attribute, and the normalized unit, the attribute being a property of the target; and a quantitative-expression training unit configured to train a quantitative-representation language model for estimating the normalized numerical values by using data including the detailed unit and the normalized numerical value.

A program according to a second aspect of the disclosure causing a computer to function as: an estimated-target-data acquiring unit configured to acquire estimated target data requiring estimation of a numerical value at a position where a predetermined representation format is arranged by using the predetermined expression format and a unit; a unit normalizing unit configured to normalize the unit; a unit detailing unit configured to specify a target being a physical entity and an attribute indicated by the predetermined expression format and the unit in the estimated target data, and to convert the normalized unit into a detailed unit uniquely corresponding to a combination of the specified target, the specified attribute, and the normalized unit, the attribute being a property of the target; and a quantitative-expression estimating unit configured to input data including the predetermined expression format and the converted detailed unit into a quantitative-representation language model trained by using data including the detailed unit and the normalized numerical value.

A training method includes: specifying a quantitative expression expressing a quantity using a numerical value and a unit from training source data; normalizing the numerical value; normalizing the unit; specifying a target being a physical entity and an attribute indicated by the numerical value and the unit in the training source data, and converting the normalized unit into a detailed unit uniquely corresponding to a combination of the specified target, the specified attribute, and the normalized unit, the attribute being a property of the target; and training a quantitative-representation language model for estimating the normalized numerical values by using data including the detailed unit and the normalized numerical value.

An estimation method includes: acquiring estimated target data requiring estimation of a numerical value at a position where a predetermined representation format is arranged by using the predetermined expression format and a unit; normalizing the unit; specifying a target being a physical entity and an attribute indicated by the predetermined expression format and the unit in the estimated target data, and converting the normalized unit into a detailed unit uniquely corresponding to a combination of the specified target, the specified attribute, and the normalized unit, the attribute being a property of the target; and inputting data including the predetermined expression format and the converted detailed unit into a quantitative-representation language model trained by using data including the detailed unit and the normalized numerical value, to estimate the numerical value at the position where the predetermined expression format is positioned.

### EFFECTS OF THE INVENTION

According to one or more aspects of the disclosure, it is possible to perform training and estimation while the differences in distribution for each target and attribute are taken into account.

### BRIEF DESCRIPTION OF THE DRAWINGS

FIG. 1 is a block diagram schematically illustrating a configuration of a training and estimation system according to first to third embodiments.
FIG. 2 is a block diagram schematically illustrating a configuration of a training device according to the first and third embodiments.
FIGS. 3A to 3C are schematic diagrams for explaining the processing by a quantitative-expression specifying unit.
FIG. 4 is a schematic diagram illustrating a first example of sentence structure data.
FIG. 5 is a schematic diagram illustrating an example of a numerical-value normalization result.
FIG. 6 is a schematic diagram illustrating an example of unit normalization information.
FIG. 7 is a schematic diagram illustrating an example of a unit normalization result.
FIG. 8 is a schematic diagram illustrating an example of target-attribute-specific-detailed-unit information.
FIG. 9 is a block diagram schematically illustrating a configuration of a unit detailing unit.
FIG. 10 is a schematic diagram illustrating an example of attribute-synonym-dictionary information.
FIG. 11 is a schematic diagram illustrating an example of a proximity-attribute detection result.
FIGS. 12A and 12B are schematic diagrams for explaining a process by a modification-attribute detecting unit.
FIGS. 13A and 13B are schematic diagrams for explaining a process by an in-table-attribute detecting unit.
FIG. 14 is a schematic diagram illustrating an example of an in-table-attribute detection result.
FIG. 15 is a schematic diagram illustrating a second example of document structure data.
FIG. 16 is a schematic diagram illustrating an example of target-synonym-dictionary information.
FIG. 17 is a schematic diagram illustrating an example of an in-document-target detection result.
FIG. 18 is a schematic diagram illustrating an example of an in-text-target detection result.
FIG. 19 is a schematic diagram illustrating an example of word-hierarchy relationship information.
FIG. 20 is a schematic diagram illustrating an example of an in-table-target detection result.
FIGS. 21A and 21B are schematic diagrams for explaining a process by a part-whole-relationship determining unit.
FIG. 22 is a schematic diagram illustrating an example of part-whole information.
FIGS. 23A and 23B are schematic diagrams for explaining a process by a difference-expression determining unit.
FIG. 24 is a schematic diagram illustrating an example of difference-expression-pattern dictionary information.
FIGS. 25A and 25B are schematic diagrams for explaining a process by a unit converting unit.
FIG. 26 is a block diagram illustrating a hardware configuration example.
FIG. 27 is a flowchart illustrating an operation of the training device according to the first embodiment.
FIG. 28 is a flowchart illustrating an operation of the quantitative-expression training unit according to the first embodiment.
FIG. 29 is a block diagram schematically illustrating a configuration of the estimation device according to the first embodiment.
FIG. 30 is a flowchart illustrating an operation of the estimation device according to the first embodiment.
FIG. 31 is a block diagram schematically illustrating a configuration of the training device according to the second embodiment.
FIG. 32 is a flowchart illustrating an operation of the training device according to the second embodiment.
FIG. 33 is a block diagram schematically illustrating a configuration of the estimation device according to the second embodiment.
FIG. 34 is a flowchart illustrating an operation of the estimation device according to the second embodiment.
FIG. 35 is a flowchart illustrating an operation of the quantitative-expression training unit according to the third embodiment.

### MODE FOR CARRYING OUT THE INVENTION

### FIRST EMBODIMENT

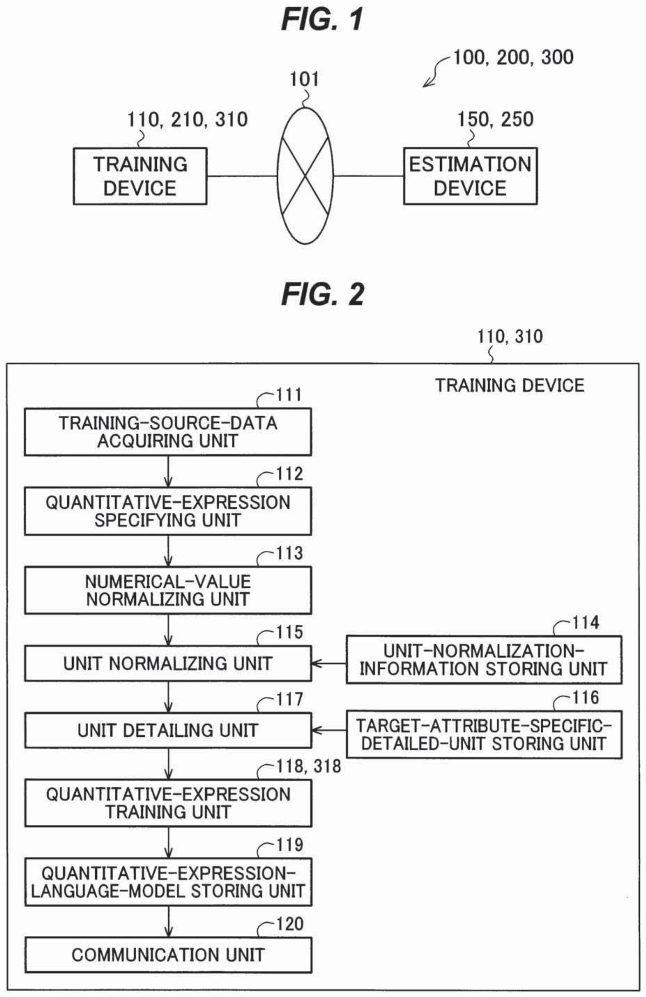

FIG. 1 is a block diagram schematically illustrating a configuration of a training and estimation system 100 according to the first embodiment.

The training and estimation system 100 includes a training device 110 and an estimation device 150.

The training device 110 and the estimation device 150 are connected to a network 101 such as the Internet.

FIG. 2 is a block diagram schematically illustrating a configuration of the training device 110 according to the first embodiment.

The training device 110 includes a training-source-data acquiring unit 111, a quantitative-expression specifying unit 112, a numerical-value normalizing unit 113, a unit-normalization-information storing unit 114, a unit normalizing unit 115, a target-attribute-specific-detailed-unit storing unit 116, a unit detailing unit 117, a quantitative-expression training unit 118, a quantitative-expression-language-model storing unit 119, and a communication unit 120.

The training-source-data acquiring unit 111 acquires training source data that is the source data used when training is performed by the training device 110. The training-source-data acquiring unit 111 may acquire the training source data, for example, via an input unit (not illustrated) or may acquire the training source data from another device via the communication unit 120. The acquired training source data is given to the quantitative-expression specifying unit 112.

The quantitative-expression specifying unit 112 specifies, in the training source data, quantitative expressions that are expressions expressing quantities with numerical values and units.

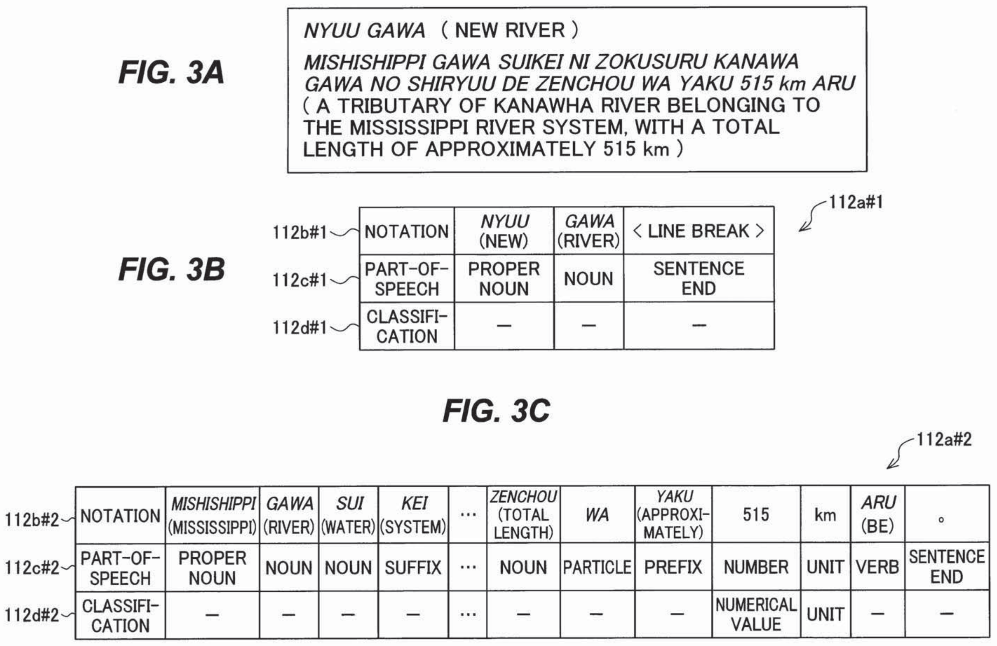

FIGS. 3A to 3C are schematic diagrams for explaining the processing by the quantitative-expression specifying unit 112.

For example, when the training source data is training text data as illustrated in FIG. 3A, the quantitative-expression specifying unit 112 extracts the text of a sentence indicated by the training text data as input text. Here, the quantitative-expression specifying unit 112 extracts the text of a sentence by using paragraphs and punctuation marks. In the example illustrated in FIG. 3A, "*nyuu gawa* (New River)" and *"mishishippi gawa suikei ni zokusuru kanawa gawa* no *shiryuu de zenchou wa yaku 515 km aru* (a tributary of Kanawha River belonging to the Mississippi River system, with a total length of approximately 515 km)" are each input text.

The quantitative-expression specifying unit 112 segments the input text into words by a known morphological analysis technique and specifies the parts of speech of the resulting words. The quantitative-expression specifying unit 112 then specifies, as a quantitative expression, a section containing a sequence of a numerical value and a unit on the basis of the specified parts of speech.

FIG. 3B is a schematic diagram illustrating a quantitative-expression specifying result 112a#1, which is the result of specifying quantitative expressions in the input text "*nyuu gawa* (New River)."

The quantitative-expression specifying result 112a#1 is tabular data including a notation row 112b#1, a part-of-speech row 112c#1, and a classification row 112d#1.

The notation row 112b#1 indicates the words segmented by a morphological analysis technique in the order they appear in the input text.

The part-of-speech row 112c#1 indicates the parts of speech of the words in the corresponding columns of the notation row 112b#1.

The classification row 112d#1 indicates the classification of the words in the corresponding columns in the notation row 112b#1. The classification here is classification of quantitative expressions and is a *"suuchi* (numerical value)" or *"tan-i* (unit)." The "-" indicates that a word is not classified. As illustrated in FIG. 3B, since the input text "*nyuu gawa* (New River)" does not include a quantitative expression, the classification row 112d#1 consists entirely of columns marked with "-."

FIG. 3C is a schematic diagram illustrating a quantitative-expression specifying result 112a#2, which is the result of specifying quantitative expressions in the input text *"mishishippi gawa suikei ni zokusuru kanawa gawa no shiryuu de zenchou wa yaku 515 km* aru (a tributary of Kanawha River belonging to the Mississippi River system, with a total length of approximately 515 km)."

The input text *"mishishippi gawa suikei ni zokusuru kanawa gawa* no *shiryuu de zenchou wa yaku 515 km aru* (a tributary of Kanawha River belonging to the Mississippi River system, with a total length of approximately 515 km)" includes a sequence of the numerical value "515" and the unit "km"; thus, the quantitative-expression specifying unit 112 specifies this as a quantitative expression. For this reason, in the quantitative-expression specifying result 112a#2, "suuchi (numerical value)" is stored in the classification row 112d#2 of the word "515" column, and *"tan-i* (unit)" is stored in the classification row 112d#2 of the word "km" column.

FIGS. 3A to 3C illustrate an example in which the training source data is training text data; alternatively, the training source data may be text data or document structure data. For example, if an explanatory article available on the web is written in a markup language such as Hyper Text Markup Language (HTML), it is possible to use tag information and a known technique to extract the training text data and the document structure data from the training source data.

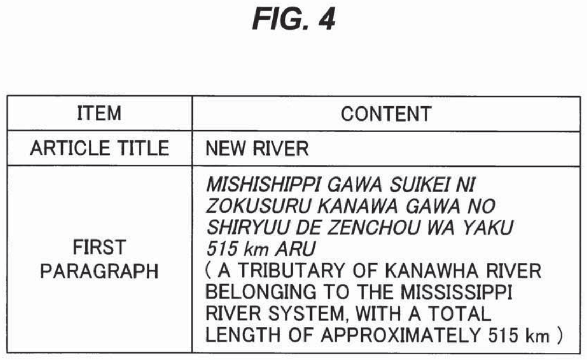

For example, quantitative-expression specifying results 112a#1 and 112a#2, such as those illustrated in FIGS. 3B and 3C, can be generated from sentence structure data containing items and contents, as illustrated in FIG. 4.

In the sentence structure data, the quantitative-expression specifying unit 112 may treat the content of one item as a sentence. However, if the content of one item includes a table, each row in the table is treated as a sentence.

The quantitative-expression specifying unit 112 then gives the quantitative-expression specifying result indicating a quantitative expression specified as described above to the numerical-value normalizing unit 113.

The numerical-value normalizing unit 113 normalizes numerical values. For example, the numerical-value normalizing unit 113 normalizes a numerical value included in a quantitative expression specified by the quantitative-expression specifying unit 112 by converting the numerical value into an exponential expression. A numerical-value normalization result, which is the numerical-value normalization result, which is the result of normalization of a numerical value performed by the numerical-value normalizing unit 113, is given to the unit normalizing unit 115.

For example, when the unit included in the quantitative expression specified by the quantitative-expression specifying unit 112 is a predetermined unit, the numerical-value normalizing unit 113 converts the numerical value adjacent into the unit into an exponential expression.

The predetermined unit here is a unit to be a target subjected to detailing by the unit detailing unit 117, as described later.

The conversion to an exponential expression is performed to standardize the number of digits in the integer part of the numerical values. Here, a numerical value is converted into an exponential expression so that it is represented by a single-digit integer part and a decimal part. For example, the numerical value "515" is converted into an exponential expression consisting of the significand "5.15," the character string "[EXP]" indicating that conversion to an exponential expression has been performed, and "+02," indicating the exponent of 10 to be multiplied with the significand.

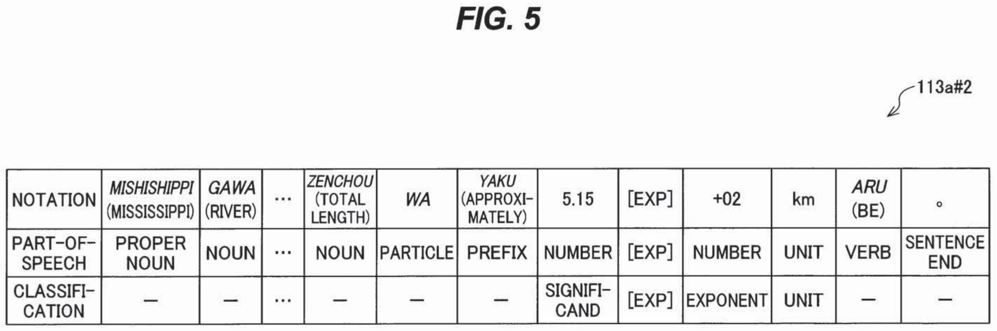

FIG. 5 is a schematic diagram illustrating a numerical-value normalization result 113a#2, which is a result obtained by the numerical-value normalizing unit 113 converting the numerical value included in the quantitative-expression specifying result 112a#2 in FIG. 3C into an exponential expression.

As illustrated in FIG. 5, in the numerical-value normalization result 113a#2, the numerical value "515" included in the quantitative-expression specifying result 112a#2 in FIG. 3C is converted into an exponential expression consisting of the significand "5.15," the character string "[EXP]," and the exponent "+02."

The unit-normalization-information storing unit 114 stores unit normalization information, which is information for the normalization of units.

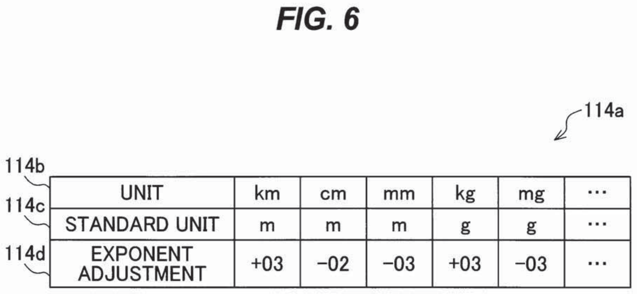

FIG. 6 is a schematic diagram illustrating an example of the unit normalization information.

The unit normalization information 114a illustrated in FIG. 6 includes a unit row 114b, a standard unit row 114c, and an exponent adjustment row 114d.

The unit row 114b stores target units to be normalized to standard units.

The standard unit row 114c stores standard units that are units to be converted for the normalization of the target units stored in the unit row 114b of the corresponding columns. For example, as illustrated in FIG. 6, the units "km," "cm," and "mm" are converted into the standard units "m."

The exponent adjustment row 114d stores adjustment values for the exponents to be used in the exponential expressions of the numerical value adjacent to a target unit in an input text when a unit stored in the unit row 114b is to be converted into the standard unit stored in the standard unit row 114c in the corresponding column. As illustrated in FIG. 6, when "km" is to be converted into "m," three must be added to the number of exponents in the exponential expression because "1 km" is "1000 m." For this reason, the field in the exponential adjustment row 114d in the same column as "km" and "m" stores the character string "+03" formed by concatenating the addition symbol "+" and the value "03" to be added. Similarly, the field in the exponential adjustment row 114d in the same column as "mm" and "m" stores the character string "-03" formed by concatenating the subtraction symbol "-" and the value "03" to be subtracted.

As described above, the unit normalization information correlates the target unit to be converted, the standard unit resulting from the conversion, and the adjustment to be done to obtain the exponent to be used as a result of the conversion.

The unit normalizing unit 115 normalizes a unit. For example, the unit normalizing unit 115 normalizes the units in the numerical-value normalization result from the numerical-value normalizing unit 113 by referring to the unit normalization information stored in the unit-normalization-information storing unit 114. The unit normalization result, which is the result of unit normalization by the unit normalizing unit 115, is given to the unit detailing unit 117.

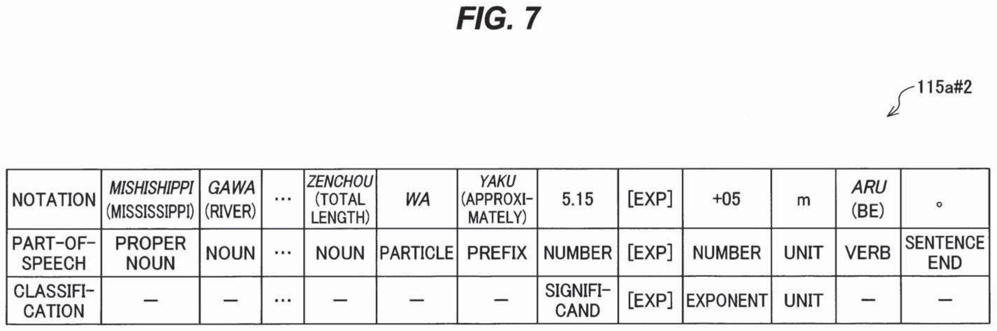

FIG. 7 is a schematic diagram illustrating a unit normalization result 115a#2 obtained by the unit normalizing unit 115 normalizing the unit included in the numerical-value normalization result 113a#2 illustrated in FIG. 5.

In the unit normalization result 115a#2 illustrated in FIG. 7, the unit "km" included in the numerical-value normalization result 113a#2 illustrated in FIG. 5 is changed to the standard unit "m," and the exponent "+02" is changed to the exponent "+05."

The target-attribute-specific-detailed-unit storing unit 116 stores target-attribute-specific-detailed-unit information for detailing a standard unit in accordance with the target and attribute.

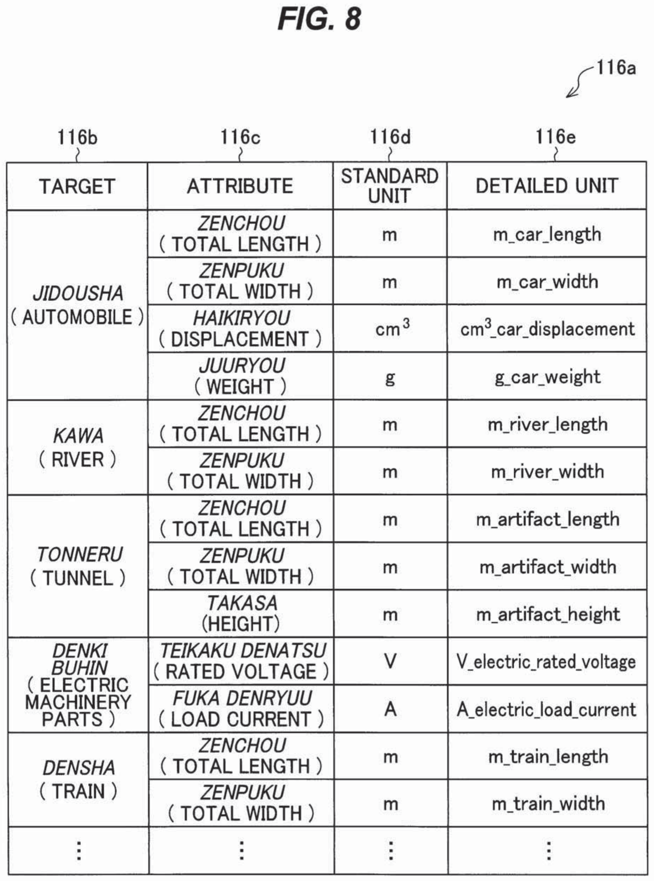

FIG. 8 is a schematic diagram illustrating an example of target-attribute-specific-detailed-unit information.

Target-attribute-specific-detailed-unit information 116a illustrated in FIG. 8 is information in a table format including a target column 116b, an attribute column 116c, a standard unit column 116d, and a detailing unit column 116e.

The target column 116b stores targets that are physical entities whose attributes can be expressed in quantities.

The attribute column 116c stores attributes that are properties of targets and that can be expressed in quantities.

The standard unit column 116d stores the standard units used for expressing the target attributes as quantities.

The detailing unit column 116e stores detailed units obtained by converting the standard units corresponding to combinations of targets and attributes. The detailed unit may be any character string as long as it is uniquely determined by a combination of a target, an attribute, and a standard unit. Here, the detailed unit is detailed-unit identification information that can identify a combination of a target, an attribute, and a standard unit.

The unit detailing unit 117 analyzes the unit normalization results from the unit normalizing unit 115 to detect combinations of targets and attributes, and, while suppressing erroneous conversions to detailed units, converts the standard units of exponential expression expressing the quantities of the detected targets and attributes into detailed units corresponding to the targets, attributes, and standard units.

For example, the unit detailing unit 117 specifies, in the training source data, a target, which is a physical entity, and an attribute of the target, which is a property of the target indicated by a numerical value and a unit, and converts the normalized unit into a detailed unit uniquely corresponding to the combination of the specified target, the specified attribute, and the normalized unit. Specifically, the unit detailing unit 117 refers to target-attribute-specific-detailed-unit information that correlates multiple targets, multiple attributes, multiple units, and multiple detailed units with each other, and specifies the detailed unit that uniquely corresponds to the combination of the specified target, the specified attribute, and the normalized unit.

Here, when a predetermined first word is present in the proximity of the quantitative expression, the unit detailing unit 117 specifies the first word as an attribute.

When a predetermined first word is included in a plurality of words in a modification relationship with the quantitative expression, the unit detailing unit 117 specifies the first word as an attribute.

When a quantitative expression is included in a table in the training source data, and a predetermined first word is included in at least one of the row item name and the column item name of the table, the unit detailing unit 117 specifies the first word as an attribute.

The unit detailing unit 117 can eliminate notation fluctuation by specifying the attribute after replacing the synonyms of the first word with the first word itself.

When the training source data is document structure data including an item and a content corresponding to the item, the content includes a quantitative expression, and the title of the item contains a predetermined second word, the unit detailing unit 117 specifies the second word as a target.

When a predetermined second word is present in the proximity of the quantitative expression, the unit detailing unit 117 specifies the second word as a target.

When a quantitative expression is present in the table in the training source data, and at least one of the row item name and the column item name of the table includes a predetermined second word, the unit detailing unit 117 specifies the second word as a target.

The unit detailing unit 117 can eliminate notation fluctuation by specifying the target after replacing the synonyms of the second word with the second word itself.

However, the unit detailing unit 117 does not convert a normalized unit into a detailed unit when a predetermined word indicating a portion of a specified target or a predetermined word indicating a whole including a specified target is in the proximity of a quantitative expression or included in a plurality of words in a modification relationship with a quantitative expression.

Moreover, the unit detailing unit 117 does not convert a normalized unit into a detailed unit when a predetermined word indicating a difference is present in the proximity of a quantitative expressions or included in a plurality of words in a modification relationship with a quantitative expression.

As described above, the unit detailing unit 117 can prevent erroneous conversion into a detailed unit.

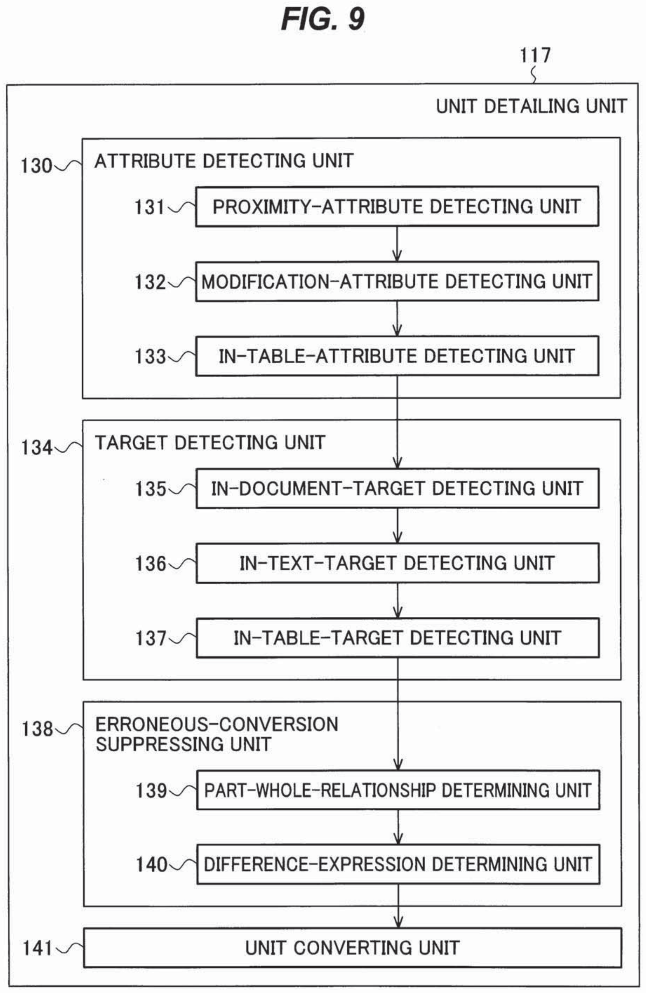

FIG. 9 is a block diagram schematically illustrating a configuration of the unit detailing unit 117.

The unit detailing unit 117 includes an attribute detecting unit 130, a target detecting unit 134, an erroneous-conversion suppressing unit 138, and a unit converting unit 141.

The attribute detecting unit 130 detects an attribute in the words included in the unit normalization result from the unit normalizing unit 115.

The attribute detecting unit 130 includes a proximity-attribute detecting unit 131, a modification-attribute detecting unit 132, and an in-table-attribute detecting unit 133.

The proximity-attribute detecting unit 131 detects an attribute in the words included in a predetermined range (in this case, the number of words) from an exponential expression in a unit normalization result. Here, detected are words that match the attributes in the target-attribute-specific-detailed-unit information stored in the target-attribute-specific-detailed-unit storing unit 116.

When a plurality of attributes is present in the predetermined range, the proximity-attribute detecting unit 131 detects the attribute closer to the exponential expression.

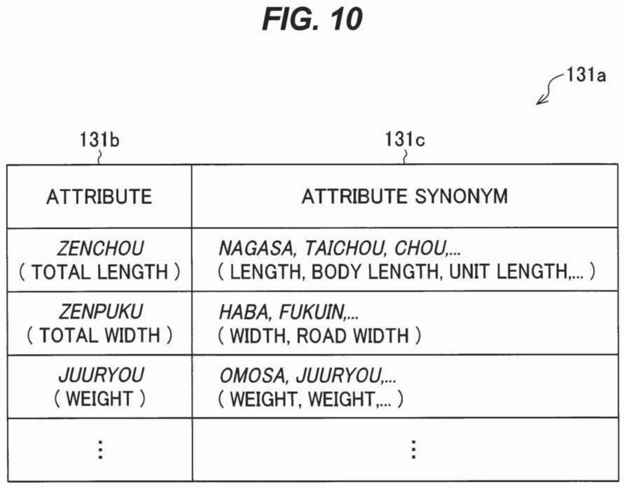

The proximity-attribute detecting unit 131 can correct notation fluctuation in the attributes by using attribute-synonym-dictionary information 131a, as illustrated in FIG. 10.

The attribute-synonym-dictionary information 131a is information in a tabular format including an attribute column 131b and an attribute synonym column 131c.

The attribute column 131b stores attributes in the target-attribute-specific-detailed-unit information.

The attribute synonym column 131c stores synonyms of the attributes stored in the attribute column 131b.

The proximity-attribute detecting unit 131 can correct notation fluctuation of attributes by referring to the attribute-synonym-dictionary information 131a to convert synonyms in the unit normalization result stored in the attribute synonym column 131c into an attribute stored in the attribute column 131b.

Then, the proximity-attribute detecting unit 131 stores the *"zokusei* (attribute)" in the classification row of the same column as the detected attribute in the unit normalization result. When the unit normalization result includes multiple exponential expressions, identification information for identifying the corresponding exponential expression is added to the classification of the detected attribute.

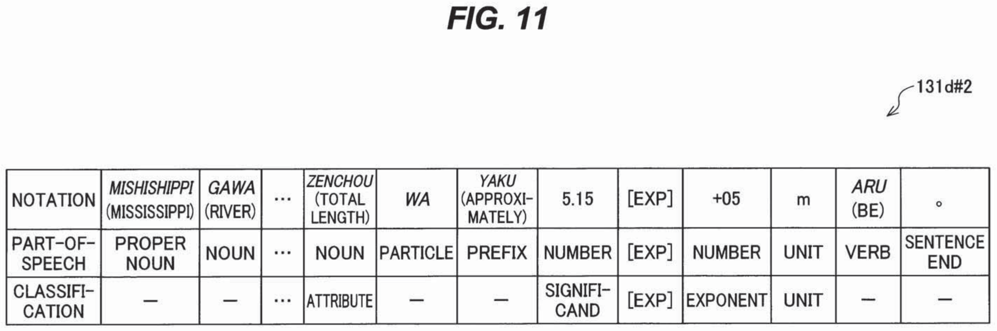

FIG. 11 is a schematic diagram illustrating a proximity-attribute detection result 131d#2 obtained by the proximity-attribute detecting unit 131 detecting a proximity attribute in the unit normalization result 115a#2 illustrated in FIG. 7.

As illustrated in FIG. 11, in the proximity-attribute detection result 131d#2, "zokusei (attribute)" is stored in the classification row of the detected attribute *"zenchou* (total length)."

Then, the proximity-attribute detecting unit 131 gives the proximity-attribute detection result to the modification-attribute detecting unit 132.

The modification-attribute detecting unit 132 detects the attribute from a word that is in a modification relationship with the exponential expression included in the proximity-attribute detection result from the proximity-attribute detecting unit 131.

When an attribute is detected from a word that is in a modification relationship with a certain exponential expression, and the proximity-attribute detecting unit 131 has already detected another attribute for the exponent expression, the attribute detected from the word in a modification relationship is used, and the word detected from the proximity is removed from the classification as an attribute. In other words, attributes detected from a modification relationship has priority over attributes detected from a proximity relationship.

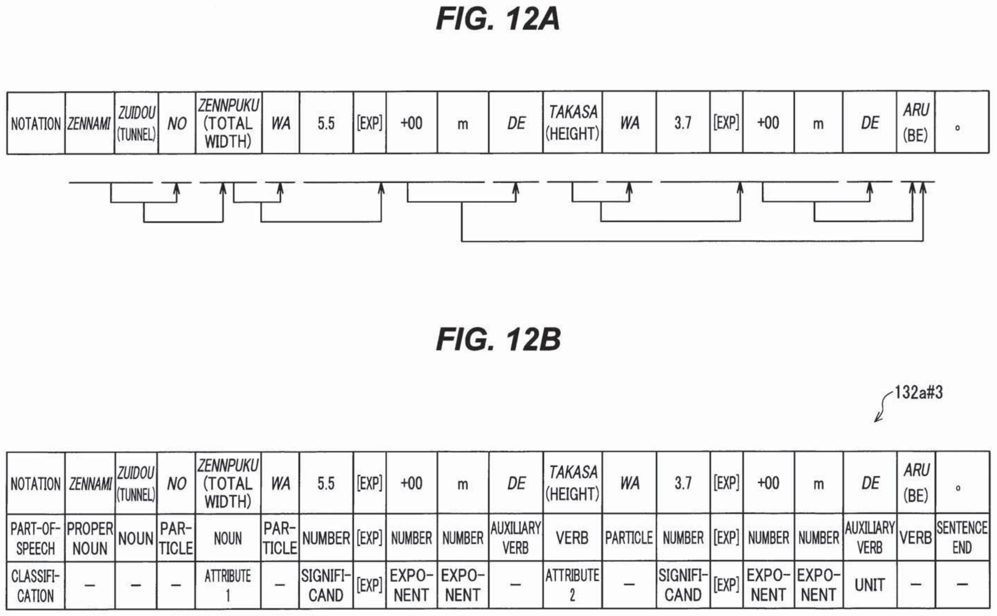

FIGS. 12A and 12B are schematic diagrams for explaining the process executed by the modification-attribute detecting unit 132.

FIG. 12A is a schematic diagram for explaining the process of detecting modification attributes for words in the notation row in the proximity-attribute detection result obtained by specifying quantitative expressions, normalizing numerical values, normalizing the units, and detecting proximity attribute in the input text *"Zennami Zuidou* no *zenpuku wa 5.5 m de takasa wa 3.7 m de aru* (The total width of the Zennami Tunnel is 5.5 m and the height is 3.7 m)."

As illustrated in FIG. 12A, the exponential expressions "5.5," "[EXP]," "+00," and "m" are in a modification relationship with the words "*zenpuku,*" "*wa,*" *"de,"* and "aru." On the basis of the words in modification relationships. The modification-attribute detecting unit 132 refers to the target-attribute-specific-detailed-unit information stored in the target-attribute-specific-detailed-unit storing unit 116 to detect the word *"fukuin* (width)" as an attribute.

Similarly, the exponential expressions "3.7," "[EXP]," "+00," and "m" are in a modification relationship with the words "*takasa* (height)," *"wa,"* "*de,*" and "*aru*." On the basis of the words in modification relationships, the modification-attribute detecting unit 132 refers to the target-attribute-specific-detailed-unit information stored in the target-attribute-specific-detailed-unit storing unit 116 to detect the word *"takasa* (height)" as an attribute.

The modification-attribute detecting unit 132 may correct notation fluctuation of the attributes by referring to the attribute-synonym-dictionary information 131a.

FIG. 12B is a schematic diagram illustrating a modification-attribute detection result 132a#3 that is the result of the modification attribute detection process described with reference to FIG. 12A.

In the modification-attribute detection result 132a#3, *"zokusei* (attribute) " is stored in the classification rows of "*zenpuku,*" which is an attribute detected from the modification relationship of the exponential expressions "5.5," "[EXP]," "+00," and "m," and in the classification row of *"takasa* (height)," which is an attribute detected from the modification relationship of the exponential expressions "3.7," "[ EXP]," "+00," and "m. "

Since the input text includes two quantitative expressions (exponential expressions), numbers indicating the order in which they appear in the input text are added to the "*zokusei* (attribute)" in the modification-attribute detection result 132a#3 to distinguish them from each other. In other words, *"zokusei* 1 (attribute 1)" indicates the quantitative representation (exponential expression) attribute that appears first in the input text, and *"zokusei 2* (attribute 2)" indicates quantitative expression (exponential expression) attribute that appears second in the input text.

The modification-attribute detecting unit 132 then gives the modification-attribute detection result to the in-table-attribute detecting unit 133.

When a table is included in the document structure data as the training source data, the in-table-attribute detecting unit 133 detects the attributes of the input text extracted from the table on the basis of the row item name and column item name in the table.

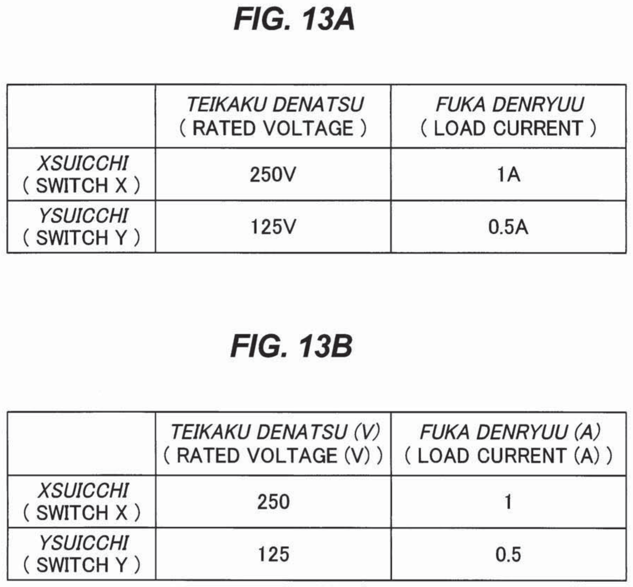

FIGS. 13A and 13B are schematic diagrams for explaining the process executed by the in-table-attribute detecting unit 133.

When the document structure data includes a table as illustrated in FIG. 13A, the input text *"Xsuicchi250V1A* (switch X, 250 V, 1 A)" is extracted from the first row in the table.

In such input text, even if quantitative expressions are specified, numerical values are normalized, units are normalized, and proximity attributes and modification attributes are detected, attributes are not detected.

Here, the in-table-attribute detecting unit 133 confirms the row item name and the column item name of the table from which the input text has been extracted, to detect, as an attribute, "*denatsu* (voltage)," which is in the same column as the exponential expressions: "2.5," "[EXP]," "+02," and "V" of "250 V" and to detect, as an attribute, *denryuu* (current)," which is in the same column as the exponential expressions: "1.0," "[EXP]," "+00" of "1 A."

The in-table-attribute detecting unit 133 then adds the detected attributes as extended attributes to the modification-attribute detection result.

In some cases, as in the table illustrated in FIG. 13B, units may be provided in the row item name and the column item name, and only numerical values may be provided in the table cells. In such a case, the in-table-attribute detecting unit 133 carries out preprocessing by adding the units in the row item name and the column item name to the numerical values in the table cells to acquire the same format as in FIG. 13A, and then performs the same in-table attribute keyword detection process as described above.

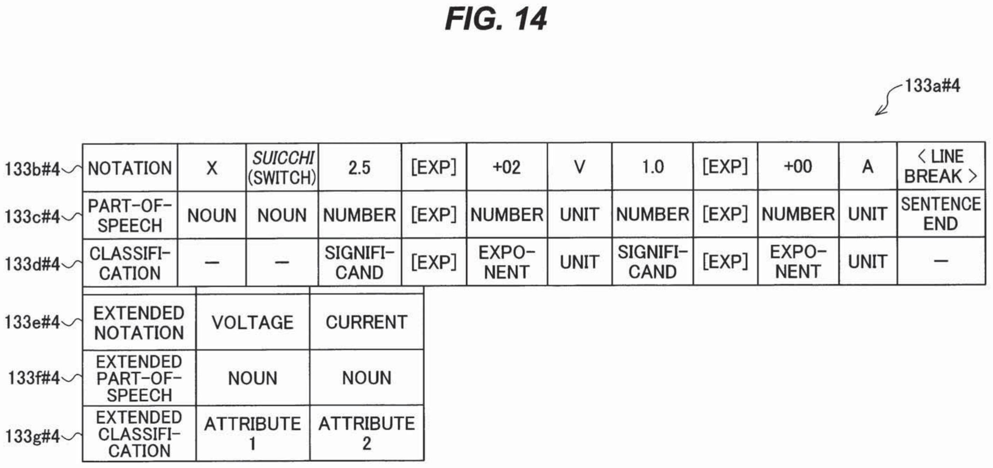

FIG. 14 is a schematic view illustrating an in-table-attribute detection result 133a#4 acquired by adding extended attributes to the modification-attribute detection result that has been acquired by subjecting the input text "Xsuicchi250V1A (switch X, 250 V, 1 A)" to specification of the quantitative expressions, normalization of the numerical values and units, and detection of the proximity attributes and the modification attributes.

The in-table-attribute detection result 133a#4 includes a notation row 133b#4, a part-of-speech row 133c#4, and a classification row 133d#4, and additionally includes an extended notation row 133e#4, an extended part-of-speech 133f#4, and an extended classification 133g#4; and these additional rows store the words, parts of speech, and classifications of the attributes detected from the row item name and the column item name in the table.

The extended notation row 133e#4, the extended part-of-speech 133f#4, and the extended classification 133g#4 store information about the detected attributes in the order of detection, in other words, in the order in which they appear in the input text.

The in-table-attribute detecting unit 133 then gives the in-table-attribute detection result, which is the detection result of in-table attributes, to the target detecting unit 134.

The target detecting unit 134 receives the detection result from the attribute detecting unit 130 and detects the target.

The target detecting unit 134 includes an in-document-target detecting unit 135, an in-text-target detecting unit 136, and an in-table-target detecting unit 137.

The in-document-target detecting unit 135 detects a target in the input text extracted from the training source data on the basis of the title of the training source data. Here, detected are words corresponding to the targets stored in the target-attribute-specific-detailed-unit information stored in the target-attribute-specific-detailed-unit storing unit 116.

For example, when the training source data is document structure data, as illustrated in FIG. 4, the in-document-target detecting unit 135 assigns the word *"kawa* (river)" extracted from the content of an article title as the target of the in-table-attribute detection result from the in-table-attribute detecting unit 133 generated on the basis of the input text extracted from the document structure data.

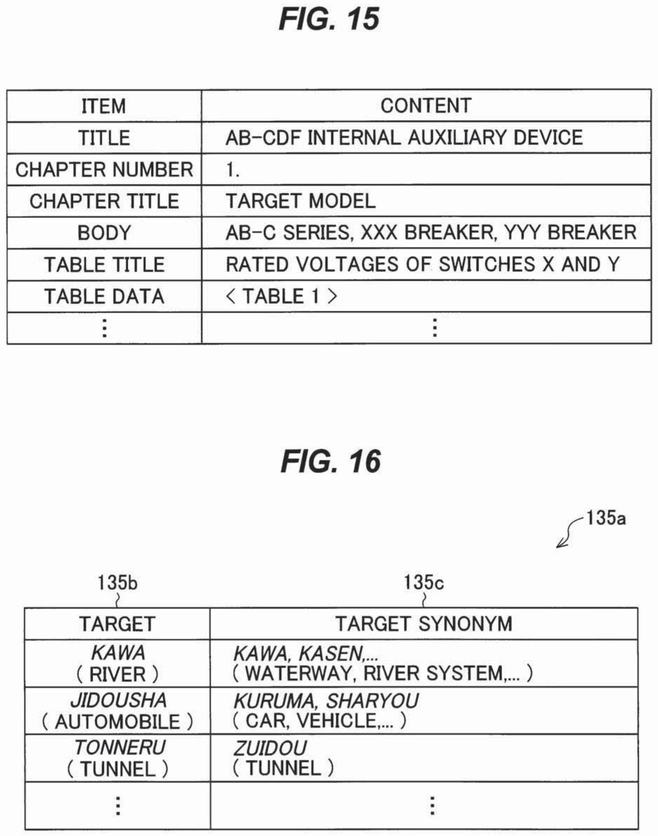

When the training source data is document structure data, as illustrated in FIG. 15, the in-document-target detecting unit 135 assigns the word *"souchi* (device)" extracted from the content of a document title as the target of the in-table-attribute detection result from the in-table-attribute detecting unit 133 generated on the basis of the input text extracted from the document structure data. Moreover, the in-document-target detecting unit 135 assigns the word "*kishu* (model)" extracted from the content of a chapter title as the target of the in-table-attribute detection result from the in-table-attribute detecting unit 133 generated on the basis of the input text extracted from the chapter. Moreover, the in-document-target detecting unit 135 assigns the word *"suicchi* (switch)" extracted from the content of a table title as the target of the in-table-attribute detection result from the in-table-attribute detecting unit 133 generated on the basis of the input text extracted from the table.

In other words, when the training source data is document structure data, the in-document-target detecting unit 135 assigns the target extracted from a title of the document structure data to be the target of the input text extracted from a range covered by the title in the document structure data.

The in-document-target detecting unit 135 can correct notation fluctuation of the target by using target-synonym-dictionary information 135a, as illustrated in FIG. 16.

The target-synonym-dictionary information 135a is information in a tabular format having target columns 135b and target synonym columns 135c.

The target columns 135b store the targets in the target-attribute-specific-detailed-unit information.

The target synonym columns 135c store synonyms of the targets stored in the target columns 135b.

When synonyms of the targets, which are stored in the target synonym columns 135c, are included in the titles in the training source data, the in-document-target detecting unit 135 can correct notation fluctuation by referring to the target-synonym-dictionary information 135a to convert the synonyms into the targets stored in the target columns 135b.

The in-document-target detecting unit 135 then adds the targets detected as extended targets to the in-table-attribute detection result from the in-table-attribute detecting unit 133.

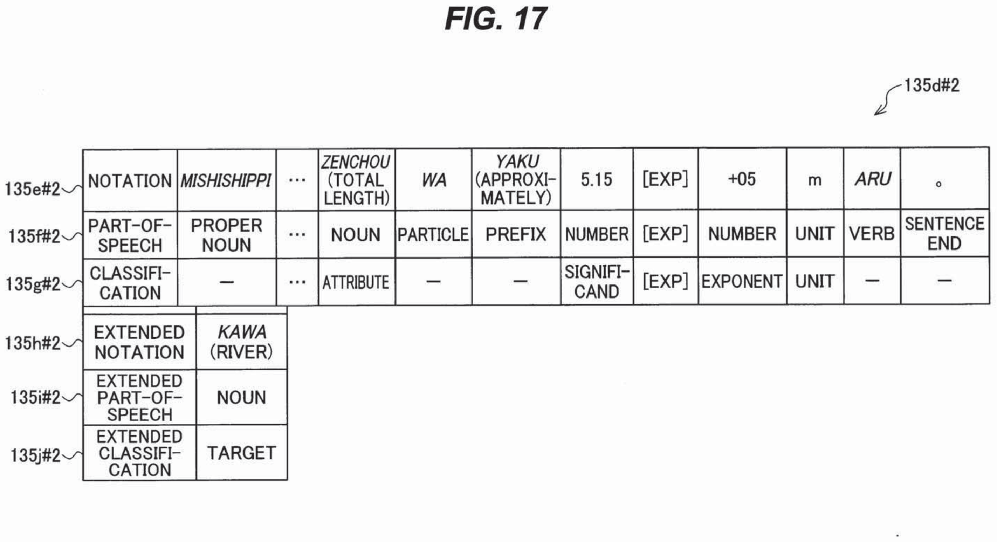

FIG. 17 is a schematic diagram illustrating an in-document-target detection result 135d#2 in which extended attributes are added to the in-table-attribute detection result from the in-table-attribute detecting unit 133.

The in-document-target detection result 135#2 is an example in which the in-table-attribute detection result from the in-table-attribute detecting unit 133 is the same as the proximity-attribute detection result 131d#2 illustrated in FIG. 11.

In the in-document-target detection result 135d#2, a notation row 135e#2, a part-of-speech row 135f#2, a classification row 135g#2, an extended notation row 135h#2, an extended part-of-speech 135i#2, and an extended classification 135j#2 are added; and words, parts of speech, and classifications of the targets detected at the in-table-attribute detecting unit 133 are stored.

The extended notation row 135h#2, the extended part-of-speech 135i#2, and the extended classification 135j#2 store information on the detected targets in the order of detection.

The in-document-target detecting unit 135 then gives the in-document-target detection result, which is the detection result of the targets in the document, to the in-text-target detecting unit 136.

The in-text-target detecting unit 136 detects the targets from the words included in a predetermined range (here, a predetermined number of words) from the exponential expressions in the in-document-target detection result. Here, detected are words corresponding to the targets stored in the target-attribute-specific-detailed-unit information stored in the target-attribute-specific-detailed-unit storing unit 116.

When multiple targets are present in the predetermined range, the in-text-target detecting unit 136 detects the target closer to an exponential expression.

The in-text-target detecting unit 136 can correct notation fluctuation of the targets by using target-synonym-dictionary information 135a, as illustrated in FIG. 16.

When synonyms of the targets, which are stored in the target synonym columns 135c, are included in the in-document-target detection result, the in-text-target detecting unit 136 can correct notation fluctuation of the targets by referring to the target-synonym-dictionary information 135a to convert the synonyms into the targets stored in the target columns 135b.

The in-text-target detecting unit 136 then stores *"taishou* (target)" in the classification row of the same column as the detected target in the in-document-target detection result. When the in-document-target detection result includes multiple exponential expressions, identification information for identifying the corresponding exponential expression is added to the classification of the detected target.

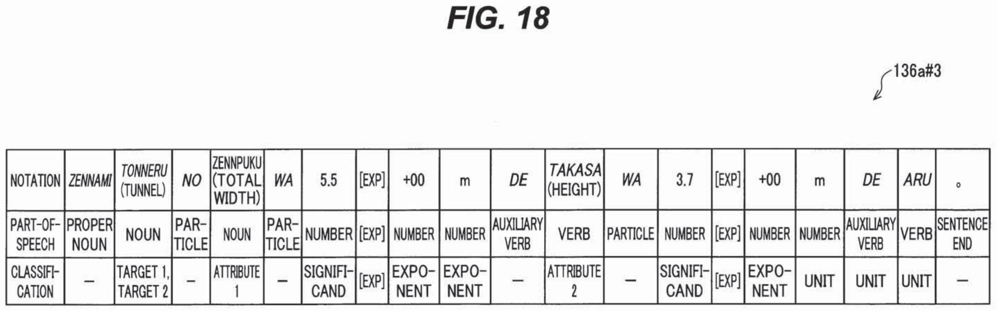

FIG. 18 is a schematic diagram illustrating an in-text-target detection result 136a#3, which is a detection result of an in-text target from the in-text-target detecting unit 136.

The in-text-target detection result 136a#3 is an example in which the in-document-target detection result from the in-document-target detecting unit 135 is the same as the modification-attribute detection result 132a#3 illustrated in FIG. 12.

As illustrated in FIG. 18, the in-text-target detection result 136a#3 stores "*taishou 1, taishou 2* (target 1, target 2)" in the classification row of the target *"tonneru* (tunnel)." In FIG. 18, a state in which the word "*zuidou* (tunnel)" in the original text is converted into "tonneru (tunnel)" by referring to the target-synonym-dictionary information 135a.

Here, *"taishou* 1 (target 1)" indicates that the target "tonneru (tunnel)" is a target of the quantity representation (exponential expression) that appears first in the input text, and *"taishou 2* (target 2)" indicates that the target "tonneru (tunnel)" is a target of the quantity expression (exponential expression) that appears second in the input text.

In the example illustrated in FIG. 18, the first quantitative expression (exponential expression) that appears in the input text is "5.5," "[EXP]," "+00," and "m," and the second quantitative expression (exponential expression) that appears in the input text is "3.7," "[EXP]," "+00," and "m. "

The in-text-target detecting unit 136 then gives the in-text-target detection result to the in-table-target detecting unit 137.

When a table is included in the document structure data as the training source data, the in-table-target detecting unit 137 detects, in the row item name and column item name of the table, the targets of the input text extracted from the table.

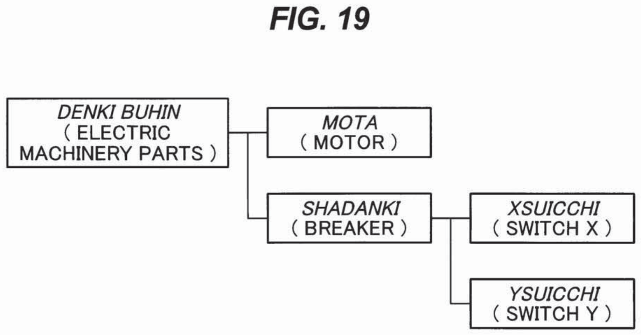

At this time, the in-table-target detecting unit 137 can detect common targets for many words having common specifications by referring to word-hierarchy relationship information indicating the hierarchical relationship between words, as illustrated in FIG. 19. In the hierarchical relationship indicated in the word-hierarchy relationship information, one hierarchy contains words that match the targets stored in the target-attribute-specific-detailed-unit information stored in the target-attribute-specific-detailed-unit storing unit 116.

When the document structure data includes a table as illustrated in FIG. 13A, the term *"Xsuicchi* (switch X)" is included in the row item name of the first row of the table. Since the term "Xsuicchi (switch X)" can be decided to be a word under the hierarchy *"denki buhin* (electric component)" from the word-hierarchy relationship information illustrated in FIG. 19, the in-table-target detecting unit 137 can extract the target *"denki buhin* (electric component)" based on the term *"Xsuicchi* (switch X). "

The in-table-target detecting unit 137 then adds the detected target as an extended target to the in-text-target detection result.

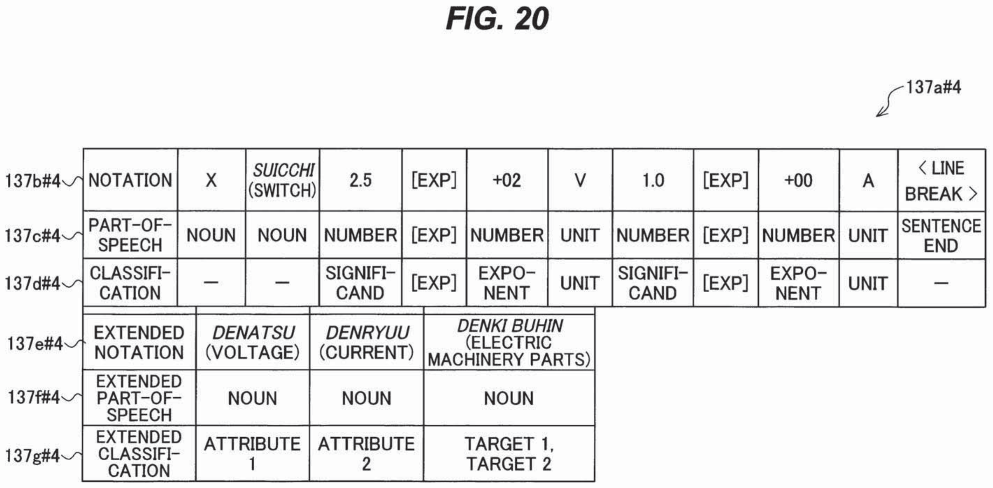

FIG. 20 is a schematic diagram illustrating an in-table-target detection result 137a#4, which is a detection result of an in-table target from the in-table-target detecting unit 137.

The in-table-target detection result 137a#4 is an example in which the in-text-target detection result from the in-text-target detecting unit 136 is the same as the in-table-attribute detection result 133a#4 illustrated in FIG. 14.

In the in-table-target detection result 137a#4, a notation row 137b#4, a part-of-speech row 137c#4, a classification row 137d#4, an extended notation row 137e#4, an extended part-of-speech 137f#4, and an extended classification 137g#4 are added; and words, parts of speech, and classifications of the targets detected from the row item names and column item names of the table are stored.

The extended notation row 137e#4, the extended part-of-speech 137f#4, and the extended classification 137g#4 store information about the detected targets in the order of detection, in other words, in the order in which they appear in the input text.

The in-table-target detecting unit 137 then gives the in-table-target detection result, which is the detection result of the in-table targets, to the erroneous-conversion suppressing unit 138.

The erroneous-conversion suppressing unit 138 suppresses erroneous conversion of the units in in-table-target detection result from the in-table-target detecting unit 137 to detailed units.

The erroneous-conversion suppressing unit 138 includes a part-whole-relationship determining unit 139 and a difference-expression determining unit 140.

When the attribute detected from the proximity of an exponential expression or the modification relationship in the in-table-target detection result from the in-table-target detecting unit 137 is the attribute of a part or the entirety of a target detected by the target detecting unit 134, the part-whole-relationship determining unit 139 prevents the unit associated with the attribute and the target from being converted into a detailed unit.

Specifically, when a word having a predetermined part-whole relationship is detected from the proximity or the modification relationship of an exponential expression corresponding to the attribute detected from the proximity or the modification relationship in the in-table-target detection result, the part-whole-relationship determining unit 139 prevents the unit associated with the attribute from being converted into a detailed unit.

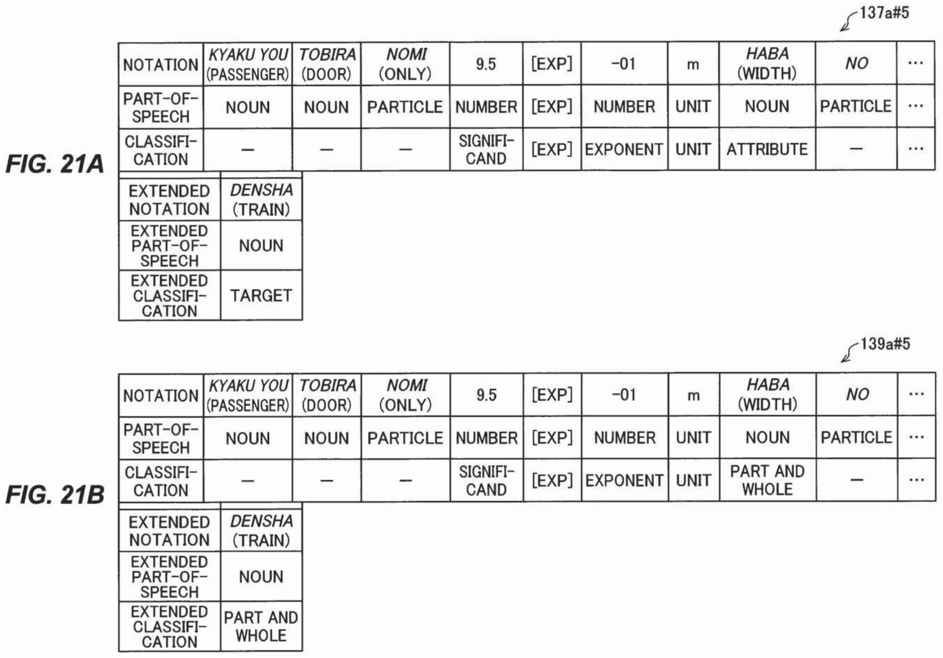

For example, a case in which the in-table-target detection result from the in-table-target detecting unit 137 is an in-table-target detection result 137a#5 as illustrated in FIG. 21A will be described.

The in-table-target detection result 137a#5 includes an attribute detected by the proximity-attribute detecting unit 131 and a target detected by the in-document-target detecting unit 135. Specifically, the word "haba (width)" in the proximity of the exponential expression is detected as an attribute, and the word *"densha* (train)" is detected as a target in the article title.

However, the word "haba (width)" does not indicate the width of the *"densha* (train)," but the width of the "*tobira* (door)," which is one of the components of the *"densha* (train)." Although it is possible to make the target-attribute-specific-detailed-unit information more detailed to define the *"densha no tobira* no *haba* (width of the train door)," but there is a trade-off that increasing the types of detailed units reduces the amount of training data for each detailed unit; therefore, excessive detailing leads to accuracy degradation and is counterproductive.

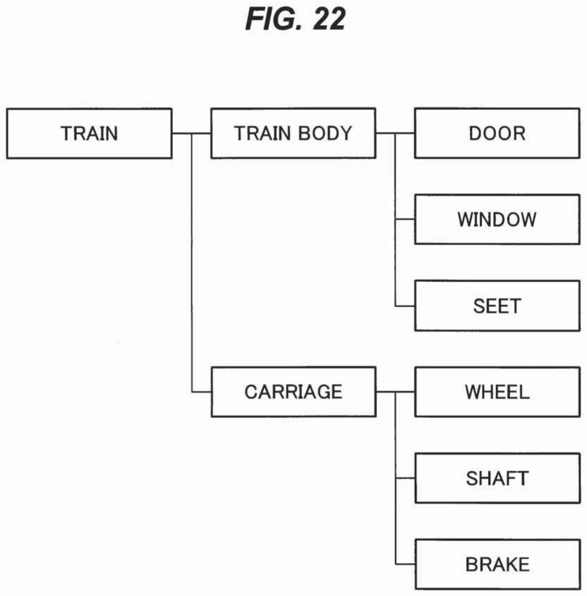

In such a case, the part-whole-relationship determining unit 139 decides whether or not the attributes and targets included in the in-table-target detection result are in a part-whole relationship by referring to part-whole information, for example, as illustrated in FIG. 22.

For example, in the in-table-target detection result 137a#5, the word *"tobira* (door)" detected from the proximity of the exponential expression is in a part-whole relationship with the target "densha (train)," so the part-whole-relationship determining unit 139 decides that the attribute *"haba* (width)" is an attribute of "*tobira* (door)." The part-whole-relationship determining unit 139 changes the classification of the target "densha (train)" and the attribute *"haba* (width)" to *"bubun zentai* (part and whole)," which is a classification other than "*taishou* (target)" and "zokusei (attribute)," to prevent erroneous detailing through the unit detailing process explained later. For example, in a part-whole-relationship determination result 139a#5 illustrated in FIG. 21B, the classification information "*taishou* (target)" of the extended notation *"densha* (train)" and the classification information "*zokusei* (attribute)" of the notation "*haba* (width)" are each rewritten to *"bubun zentai* (part and whole)." A word that is a part or whole of the target may be detected from words that are in a modification relationship with an exponential expression. Here, an example of suppressing the attribute of *"tobira* (door)" that is a lower order in the part-whole relationship has been described; in contrast, the attribute of *"densha* (train)" that is a higher order may be suppressed, and the unit of the attribute of "*tobira* (door)" may be subjected to detailing.

The part-whole-relationship determining unit 139 then gives the part-whole-relationship determination result to the difference-expression determining unit 140.

In the part-whole-relationship determination result from the part-whole-relationship determining unit 139, when the quantity of attributes detected from the proximity or the modification relationship is expressed by a difference expression, the difference-expression determining unit 140 prevents the units associated with the attributes from being converted into detailed units.

Specifically, when a predetermined difference expression is detected from the proximity or a modification relationship of an exponential expression associated with the attribute detected from the proximity or a modification relationship in the part-whole-relationship determination result, the difference-expression determining unit 140 prevents the unit associated with the attribute from being converted into a detailed unit.

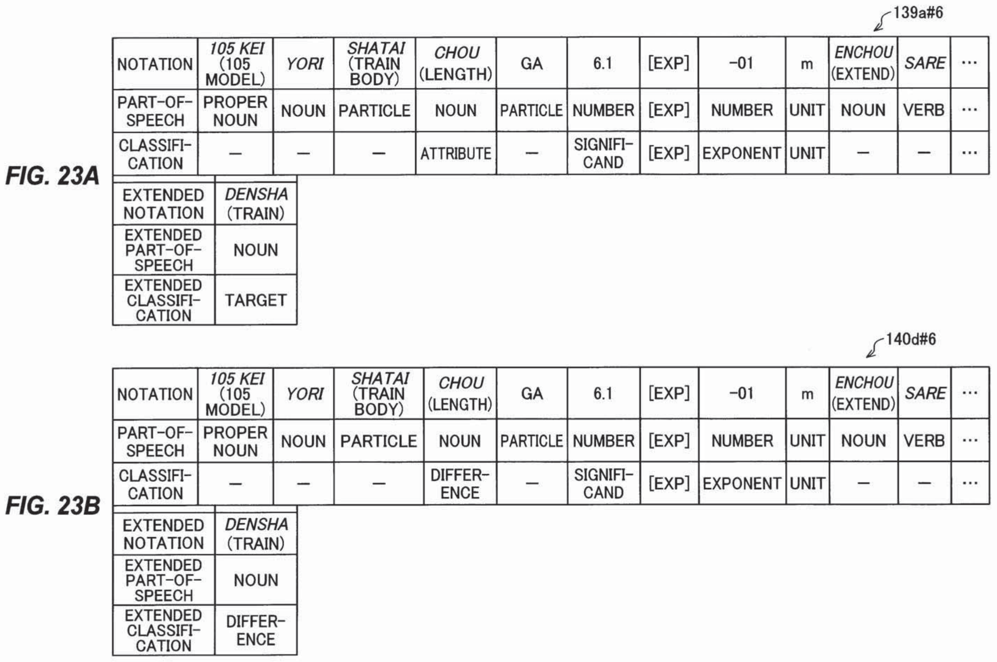

For example, a case where the part-whole-relationship determination result from the part-whole-relationship determining unit 139 is a part-whole-relationship determination result 139a#6, as illustrated in FIG. 23A, will be described.

The part-whole-relationship determination result 139a#6 includes an attribute detected by the proximity-attribute detecting unit 131 and a target detected by the in-document-target detecting unit 135. Specifically, the word *"chou* (length)" in the proximity of the exponential expression is detected as an attribute, and the word *"densha* (train)" is detected as a target from the article title.

However, the word "chou (length)" refers to the increment from the length of another car model "105 *kei* (105 series)," not the *"nagasa* (length)" of the *"densha* (train)," or target.

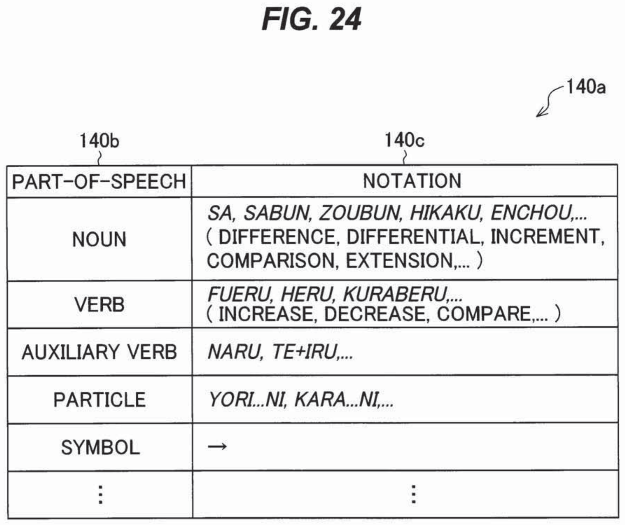

In such a case, the difference-expression determining unit 140 refers to difference-expression-pattern dictionary information 140a illustrated in FIG. 24 to determine the difference expression included in the part-whole-relationship determination result.

The difference-expression-pattern dictionary information 140a is information in a tabular format having part-of-speech columns 140b and notation columns 140c.

The part-of-speech columns 140b store the parts of speech of words.

The notation columns 140c store the words.

The difference-expression-pattern dictionary information 140a allows a difference expression to be specified on the basis of a combination of a word and a part of speech. In other words, when a word stored in a notation column 140c is a part of speech stored in a part-of-speech column 140b, the word is determined to be a difference expression.

For example, since the word *"enchou* (extension)," which is a *"meishi* (noun)" in the difference-expression-pattern dictionary information 140a, is detected from the part-whole-relationship determination result 139a#6, the difference-expression determining unit 140 changes each of the classifications of the words *"chou* (length)" and *"densha* (train)," which are respectively an attribute and a target associated with exponential expressions in the proximity, to *"sabun* (difference)," which is a classification other than "*zokusei* (attribute)" and "*taishou* (target)," to prevent erroneous detailing through a unit detailing process explained later. For example, in a difference-expression determination result 140d#6 illustrated in FIG. 23B, the classification information "taishou (target)" of the extended notation "*densha* (train)" and the classification information "*zokusei* (attribute)" of the notation "*chou* (length)" are each rewritten to "sabun (difference)."

The difference-expression determining unit 140 then gives the difference-expression determination result to the unit converting unit 141.

The unit converting unit 141 refers to the target-attribute-specific-detailed-unit information stored in the target-attribute-specific-detailed-unit storing unit 116 and converts the units included in the exponential expression in the difference-expression determination result from the difference-expression determining unit 140 into detailed units associated with the units and with the targets and attributes associated with the exponential expression.

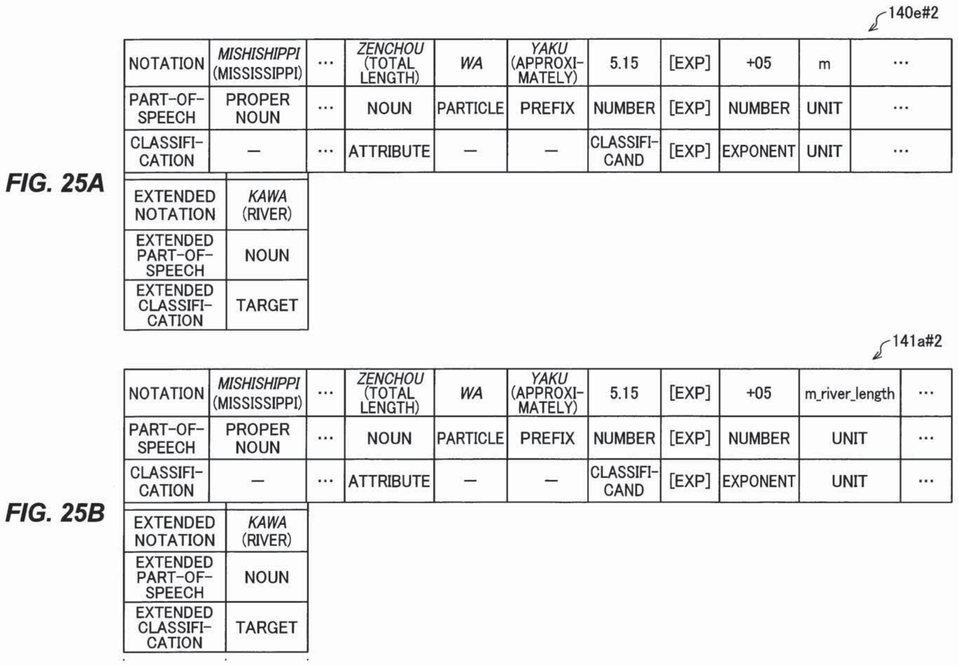

For example, when the difference-expression determination result from the difference-expression determining unit 140 is a difference-expression determination result 140e#2 illustrated in FIG. 25A, the unit "m" associated with the target "kawa (river)" and the attribute *"zenchou* (total length)" is associated with "m_river_length" in the target-attribute-specific-detailed-unit information 116a illustrated in FIG. 8; therefore, the unit "m" in the difference-expression determination result 140e#2 is converted into "m_river_length," as the unit conversion result 141a#2 illustrated in FIG. 25B.

When the difference-expression determination result generated from one sentence includes multiple exponential expressions, the unit converting unit 141 repeats the above process for each of the units included in the exponential expressions.

The unit converting unit 141 then gives the unit conversion result, which is the result of the unit conversion process, to the quantitative-expression training unit 118.

The quantitative-expression training unit 118 trains a quantitative-representation language model for estimating normalized numerical values by using data including the detailed units and normalized numerical values.

For example, the quantitative-expression training unit 118 trains a quantitative-representation language model, which is a model for estimating quantitative expressions, by using a unit conversion result from the unit converting unit 141.

The quantitative-expression-language-model storing unit 119 stores the quantitative-representation language model trained by the quantitative-expression training unit 118.

The communication unit 120 transmits the quantitative-representation language model stored in the quantitative-expression-language-model storing unit 119 to the estimation device 150.

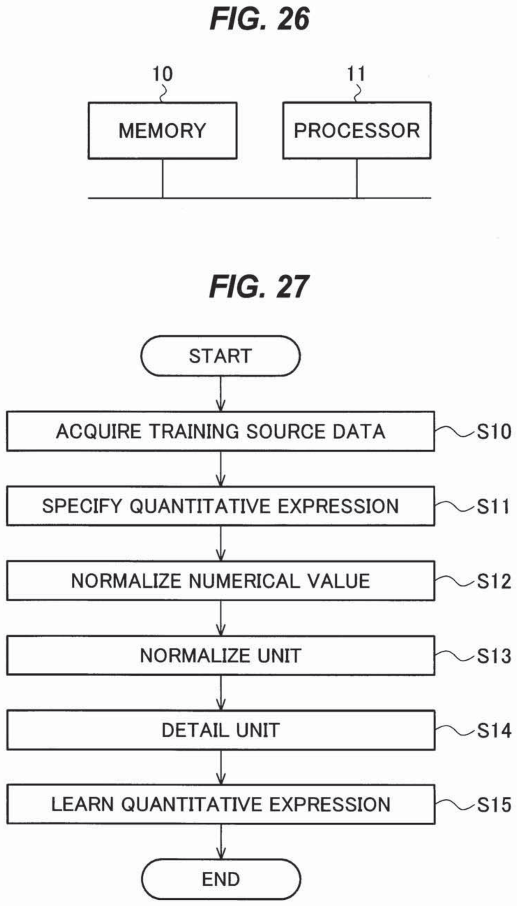

Some or all of the training-source-data acquiring unit 111, the quantitative-expression specifying unit 112, the numerical-value normalizing unit 113, the unit normalizing unit 115, the unit detailing unit 117, and the quantitative-expression training unit 118 described above can be implemented by, for example, a memory 10 and a processor 11 such as a central processing unit (CPU) that executes programs stored in the memory 10, as illustrated in FIG. 26. Such programs may be provided over a network or may be recorded and provided on a recording medium. That is, such programs may be provided, for example, as a program product.

In other words, the training device 110 can be implemented by what is commonly known as a computer.

The unit-normalization-information storing unit 114, the target-attribute-specific-detailed-unit storing unit 116, and the quantitative-expression-language-model storing unit 119 can be implemented by auxiliary storage, such as a hard disk drive (HDD) or a solid state drive (SSD).

Furthermore, the communication unit 120 can be implemented by a communication I/F such a network interface card (NIC).

FIG. 27 is a flowchart illustrating the operation of the training device 110 according to the first embodiment.

First, the training-source-data acquiring unit 111 acquires training source data (step S10). The acquired training source data is given to the quantitative-expression specifying unit 112.

Next, the quantitative-expression specifying unit 112 analyzes the received training source data and specifies a quantitative expression (step S11). A quantitative-expression specifying result indicating the specified quantitative expression is given to the numerical-value normalizing unit 113.

The numerical-value normalizing unit 113 normalizes the numerical value part of the quantitative expression by converting it into an exponential expression in the received quantitative-expression specifying result (step S12). A numerical-value normalization result indicating the normalized numerical value is given to the unit normalizing unit 115.

The unit normalizing unit 115 refers to the unit normalization information stored in the unit-normalization-information storing unit 114 to normalize the unit and adjusts the exponential part of the exponential expression in accordance with the change of the unit in the received numerical-value normalization result (step S13). A unit normalization result indicating the normalized unit is given to the unit detailing unit 117.

The unit detailing unit 117 refers to the target-attribute-specific-detailed-unit information stored in the target-attribute-specific-detailed-unit storing unit 116 to detail the unit in the received unit normalization result (step S14). The unit conversion result indicating the detailed unit is given to the quantitative-expression training unit 118.

The quantitative-expression training unit 118 uses the received unit conversion result to perform a training process and generate a quantitative-representation language model (step S15). The generated quantitative-representation language model is stored in the quantitative-expression-language-model storing unit 119 and also sent to the estimation device 150 via the communication unit 120.

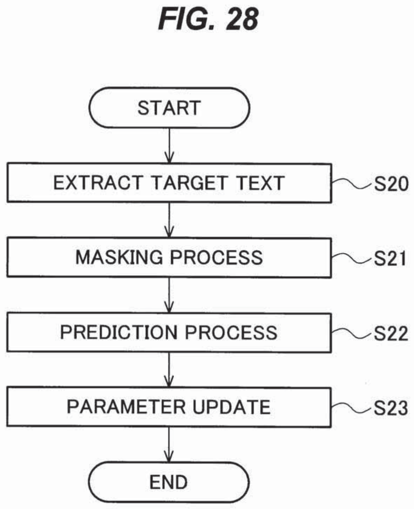

FIG. 28 is a flowchart illustrating the operation of the quantitative-expression training unit 118 according to the first embodiment.

First, the quantitative-expression training unit 118 extracts a text stored in a notation row in the unit conversion result as a target text (step S20).

Next, the quantitative-expression training unit 118 performs a masking process to mask a portion of the target text for which prediction is to be performed to generate a masked text (step S21).

Next, the quantitative-expression training unit 118 performs a process of predicting the masked portion of the masked text with the quantitative-representation language model (step S22).

Next, the quantitative-expression training unit 118 detects the difference between the prediction result in step S22 and the correct answer obtained from the target text before masking, and performs a parameter update process of the quantitative-representation language model (step S23).

The quantitative-expression training unit 118 trains the quantitative-representation language model by performing the above process on all unit conversion results received from the unit detailing unit 117.

For steps S21 to S23 in the process, for example, the technique described in Reference 1 below can be used.

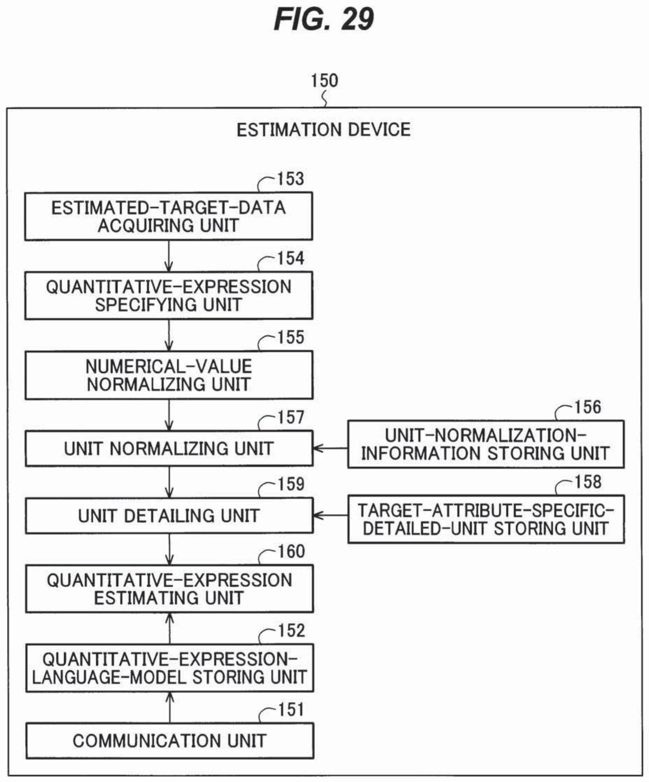

FIG. 29 is a block diagram schematically illustrating a configuration of the estimation device 150 according to the first embodiment.

The estimation device 150 includes a communication unit 151, a quantitative-expression-language-model storing unit 152, an estimated-target-data acquiring unit 153, a quantitative-expression specifying unit 154, numerical-value normalizing unit 155, unit-normalization-information storing unit 156, unit normalizing unit 157, a target-attribute-specific-detailed-unit storing unit 158, a unit detailing unit 159, and a quantitative-expression estimating unit 160.

The communication unit 151 receives a quantitative-representation language model from the training device 110. The received quantitative-representation language model is given to the quantitative-expression-language-model storing unit 152.

The quantitative-expression-language-model storing unit 152 stores the quantitative-representation language model received by the communication unit 151.

The estimated-target-data acquiring unit 153 uses a predetermined expression format and a unit to acquire estimated target data that requires estimation of a numerical value at a position where the predetermined representation format is arranged. The acquired estimated target data is given to the quantitative-expression specifying unit 154. The predetermined expression format is, for example, "* ^ *", but is not limited to such an example.

The estimated-target-data acquiring unit 153 may receive input of the estimated target data via, for example, an input unit (not illustrated). Alternatively, the estimated-target-data acquiring unit 153 may acquire estimated target data from another device via the communication unit 151. For example, the estimated-target-data acquiring unit 153 can acquire text data such as *"zenpuku ga* 1.2m de *zenchou ** ^ ** m no jidousha* (an automobile having a total width of 1.2 m and a total length of * ^ * m)" as estimated target data.

When the estimated target data includes a quantitative expression, the quantitative-expression specifying unit 154 specifies the quantitative expression. The method of specifying the quantitative expression is the same as the method of specifying the quantitative expression with the quantitative-expression specifying unit 112 of the training device 110, except for the numerical portion also being specified as a quantitative expression when it has the predetermined expression format described above.

For example, when the estimated target data is "*zenpuku ga 1.2m de zenchou * ^ *m no jidousha* (an automobile having a total width of 1.2 m and a total length of * ^ * m)," the quantitative-expression specifying unit 154 specifies "1.2m" and *"zenchou ** ^ * m (total length of * ^ * m)" as a quantitative expression.

Then, the quantitative-expression specifying unit 154 gives the quantitative-expression specifying result indicating the quantitative expression specified as described above to the numerical-value normalizing unit 155.

The numerical-value normalizing unit 155 normalizes the numerical value included in the quantitative expression specified by the quantitative-expression specifying unit 154 by converting it into an exponential expression. The method of normalizing the numerical value is the same as the method of normalizing a numerical value with the numerical-value normalizing unit 113 of the training device 110. However, when the numerical value portion has a predetermined expression format as described above, it is not necessary to convert it into an exponential expression. The numerical-value normalization result, which is the result of the numerical-value normalization performed by the numerical-value normalizing unit 155, is given to the unit normalizing unit 157.

The unit-normalization-information storing unit 156 stores unit normalization information, which is information for the normalization of a unit. The unit normalization information may be the same as the unit normalization information stored in the unit-normalization-information storing unit 114 of the training device 110.

The unit normalizing unit 157 refers to the unit normalization information stored in the unit-normalization-information storing unit 156 to normalize the units included in the numerical-value normalization result from the numerical-value normalizing unit 155. The method of normalizing a unit with the unit normalizing unit 157 is the same as the method of normalizing a unit with the unit normalizing unit 115 in the training device 110. However, when the numerical value portion is a predetermined expression format as described above, it is not necessary to adjust the exponent. The unit normalization result, which is the result of unit normalization by the unit normalizing unit 157, is given to the unit detailing unit 159.

The unit detailing unit 159 analyzes the unit normalization results from the unit normalizing unit 157 to detect combinations of targets and attributes, and, while suppressing erroneous conversions to detailed units, converts the standard units of exponential expression expressing the detected targets and attributes into detailed units corresponding to the targets, attributes, and standard units. The method of detailing a unit with the unit detailing unit 159 is the same as the method of detailing a unit with the unit detailing unit 117 of the training device 110. Then, the unit detailing unit 159 gives the unit conversion result to the quantitative-expression estimating unit 160.

The quantitative-expression estimating unit 160 inputs data including a predetermined expression format and a detailed unit resulting from conversion into a quantitative-representation language model trained by using data including detailed units and normalized numerical values, to estimate the numerical value at the position where the predetermined expression format is positioned.

Here, the quantitative-expression estimating unit 160 uses the unit conversion result from the unit detailing unit 159 to estimate the quantitative expression.

For example, the quantitative-expression estimating unit 160 performs the estimating by extracting estimated data from a notation row of the unit conversion result and inputting the estimated data to the quantitative-representation language model stored in the quantitative-expression-language-model storing unit 152. Here, the portion "*^*," which is the predetermined expression format, is estimated.

Some or all of the estimated-target-data acquiring unit 153, the quantitative-expression specifying unit 154, the numerical-value normalizing unit 155, the unit normalizing unit 157, the unit detailing unit 159, and the quantitative-expression estimating unit 160 described above can be implemented by, for example, the memory 10 and the processor 11 executing programs stored in the memory 10, as illustrated in FIG. 26. Such programs may be provided over a network or may be recorded and provided on a recording medium. That is, such programs may be provided, for example, as a program product.

In other words, the estimation device 150 can be implemented by what is commonly known as a computer.

The unit-normalization-information storing unit 156, the target-attribute-specific-detailed-unit storing unit 158, and the quantitative-expression-language-model storing unit 152 can be implemented by an auxiliary storage.

The communication unit 151 can be implemented by a communication I/F.

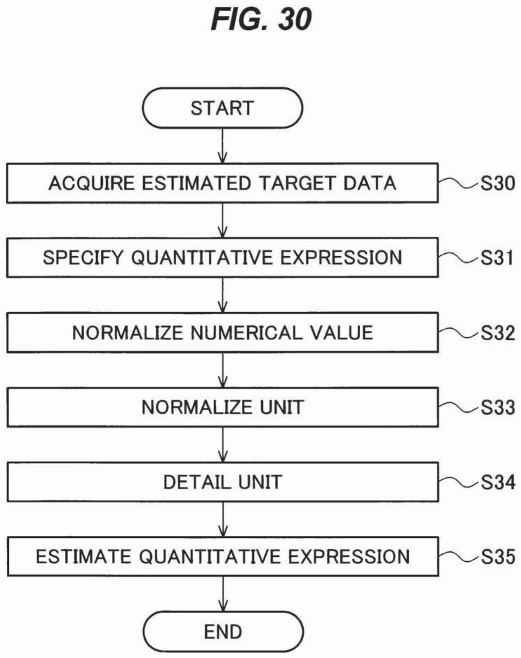

FIG. 30 is a flowchart illustrating the operation of the estimation device 150 according to the first embodiment.

First, the estimated-target-data acquiring unit 153 acquires estimated target data (step S30). The acquired estimated target data is given to the quantitative-expression specifying unit 154.

Next, the quantitative-expression specifying unit 154 analyzes the received estimated target data and specifies a quantitative expression (step S31). The quantitative-expression specification result indicating the specified quantitative expression is given to the numerical-value normalizing unit 155.

The numerical-value normalizing unit 155 normalizes the numerical value part of the quantitative expression by converting it into an exponential expression in the received quantitative-expression specifying result (step S32). The numerical-value normalization result indicating the normalized numerical value is given to the unit normalizing unit 157.

The unit normalizing unit 157 refers to the unit normalization information stored in the unit-normalization-information storing unit 156 to normalize the unit and adjusts the exponent part of the exponential expression in accordance with the change of unit in the received numerical-value normalization result (step S33). The unit normalization result indicating the normalized unit is given to the unit detailing unit 159.

The unit detailing unit 159 refers to the target-attribute-specific-detailed-unit information stored in the target-attribute-specific-detailed-unit storing unit 158 to detail the unit in the received unit normalization result (step S34). The unit conversion result indicating the detailed unit is given to the quantitative-expression estimating unit 160.

The quantitative-expression estimating unit 160 uses the received unit conversion result to perform estimation (step S35).

According to the first embodiment, the distribution of numerical values that vary greatly for each target and attribute can be standardized to a specific number of digits; therefore, quantitative representations can be surely learned, and a quantitative expression can be surely estimated by using a trained model.

### SECOND EMBODIMENT

As illustrated in FIG. 1, a training and estimation system 200 according to the second embodiment includes a training device 210 and an estimation device 250.

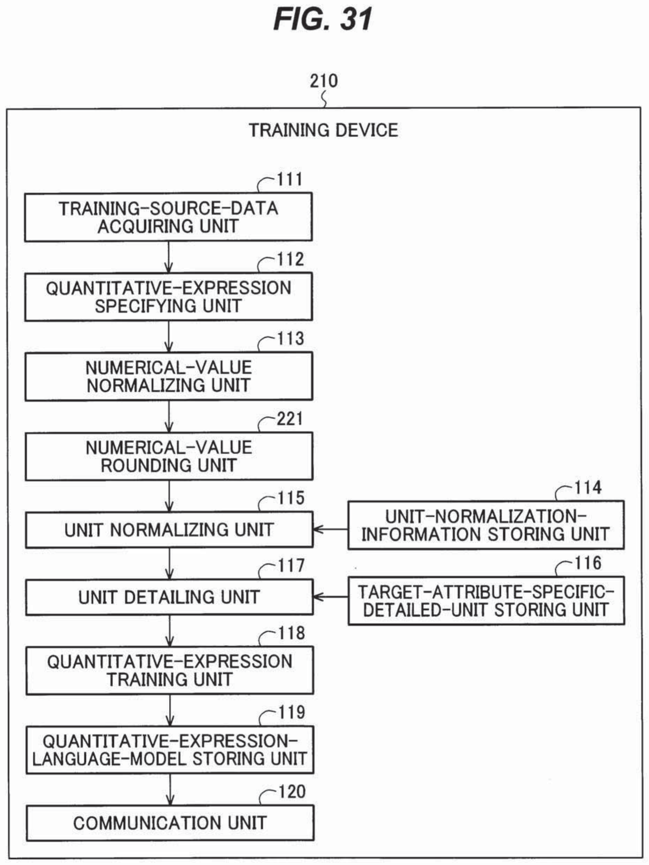

FIG. 31 is a block diagram schematically illustrating the training device 210.

The training device 210 includes a training-source-data acquiring unit 111, a quantitative-expression specifying unit 112, a numerical-value normalizing unit 113, a unit-normalization-information storing unit 114, a unit normalizing unit 115, a target-attribute-specific-detailed-unit storing unit 116, a unit detailing unit 117, a quantitative-expression training unit 118, a quantitative-expression-language-model storing unit 119, a communication unit 120, and a numerical-value rounding unit 221.

The training-source-data acquiring unit 111, the quantitative-expression specifying unit 112, the numerical-value normalizing unit 113, the unit-normalization-information storing unit 114, the unit normalizing unit 115, the target-attribute-specific-detailed-unit storing unit 116, the unit detailing unit 117, the quantitative-expression training unit 118, the quantitative-expression-language-model storing unit 119, and the communication unit 120 of the training device 210 according to the second embodiment are respectively the same as the training-source-data acquiring unit 111, the quantitative-expression specifying unit 112, the numerical-value normalizing unit 113, the unit-normalization-information storing unit 114, the unit normalizing unit 115, the target-attribute-specific-detailed-unit storing unit 116, the unit detailing unit 117, the quantitative-expression training unit 118, the quantitative-expression-language-model storing unit 119, and the communication unit 120 of the training device 110 according to the first embodiment.

However, the numerical-value normalizing unit 113 of the training device 210 according to the second embodiment gives a numerical-value normalization result to the numerical-value rounding unit 221. The unit normalizing unit 115 of the training device 210 according the second embodiment normalizes a numerical value in the numerical-value rounding result from the numerical-value rounding unit 221, not the numerical-value normalization result.

The numerical-value rounding unit 221 performs a numerical-value rounding process in which a numerical value included in the numerical-value normalization result from the numerical-value normalizing unit 113 is rounded to a number of predetermined digits. In the second embodiment, the numerical-value rounding unit 221 rounds a numerical value of a predetermined number of digits to obtain a number of predetermined decimal places. For example, when a numerical value included in the numerical-value normalization result is "3.5569," the numerical-value rounding unit 221 rounds this numerical value to the second decimal place to yield the numerical value of "3.6."

In the second embodiment, the numerical-value rounding unit 221 rounds a numerical value of a predetermined number of digits to obtain a number of predetermined decimal places, but the second embodiment is not limited to such an example. For example, the numerical-value rounding unit 221 may round down a numerical value of predetermined digits.

Then, the numerical-value rounding unit 221 gives the numerical-value rounding result including the numerical value rounded to the predetermined decimal places to the unit normalizing unit 115.

As described above, the quantitative-expression training unit 118 uses numerical values normalized after the numerical-value rounding process to train a quantitative-representation language model.

The numerical-value rounding unit 221 described above can also be implemented by, for example, a memory 10 and a processor 11 that executes programs stored in the memory 10, as illustrated in FIG. 26.

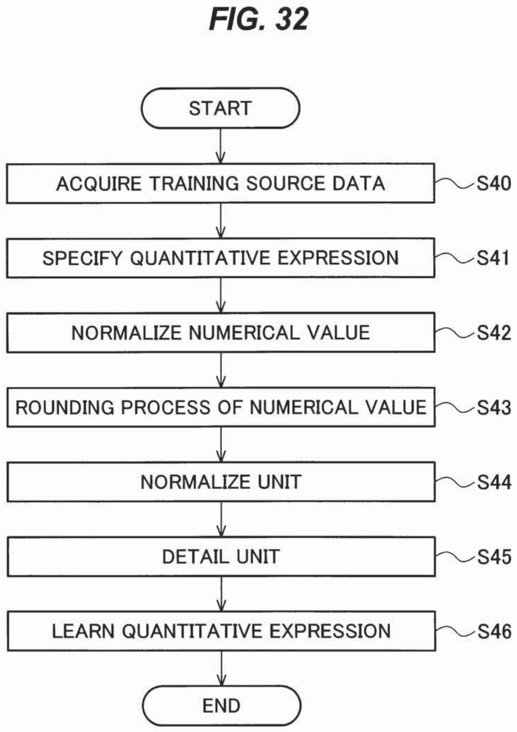

FIG. 32 is a flowchart illustrating the operation of the training device 210 according to the second embodiment.

First, the training-source-data acquiring unit 111 acquires training source data (step S40). The acquired training source data is given to the quantitative-expression specifying unit 112.

Next, the quantitative-expression specifying unit 112 analyzes the received training source data and specifies a quantitative expression (step S41). A quantitative-expression specifying result indicating the specified quantitative expression is given to the numerical-value normalizing unit 113.

The numerical-value normalizing unit 113 normalizes the numerical value part of the quantitative expression by converting it into an exponential expression in the received quantitative-expression specifying result (step S42). The numerical-value normalization result indicating the normalized numerical value is given to the numerical-value rounding unit 221.

The numerical-value rounding unit 221 rounds a numerical value of a predetermined number of digits in the numerical-value normalization result to obtain a number of predetermined decimal places (step S43). A numerical-value rounding result indicating a numerical value of a limited number of digits is given to the unit normalizing unit 115.

The unit normalizing unit 115 refers to the unit normalization information stored in the unit-normalization-information storing unit 114 to normalize the unit and adjusts the exponent part of the exponential expression in accordance with the change of the unit in the received numerical-value rounding result (step S44). A unit normalization result indicating the normalized unit is given to the unit detailing unit 117.

The unit detailing unit 117 refers to the target-attribute-specific-detailed-unit information stored in the target-attribute-specific-detailed-unit storing unit 116 to detail the unit in the received unit normalization result (step S45). The unit conversion result indicating the detailed unit is given to the quantitative-expression training unit 118.

The quantitative-expression training unit 118 uses the received unit conversion result to perform a learning process and generates a quantitative-representation language model (step S46). The generated quantitative-representation language model is stored in the quantitative-expression-language-model storing unit 119 and also sent to the estimation device 250 via the communication unit 120.

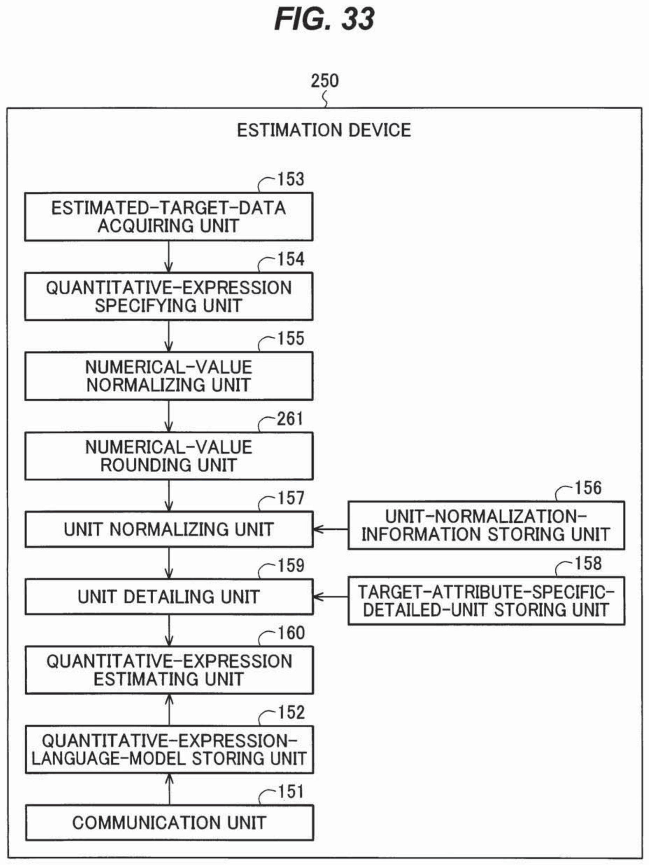

FIG. 33 is a block diagram schematically illustrating a configuration of the estimation device 250 according to the second embodiment.

The estimation device 250 includes a communication unit 151, a quantitative-expression-language-model storing unit 152, an estimated-target-data acquiring unit 153, a quantitative-expression specifying unit 154, numerical-value normalizing unit 155, unit-normalization-information storing unit 156, unit normalizing unit 157, a target-attribute-specific-detailed-unit storing unit 158, a unit detailing unit 159, a quantitative-expression estimating unit 160, and a numerical-value rounding unit 261.

The communication unit 151, the quantitative-expression-language-model storing unit 152, the estimated-target-data acquiring unit 153, the quantitative-expression specifying unit 154, the numerical-value normalizing unit 155, the unit-normalization-information storing unit 156, the unit normalizing unit 157, the target-attribute-specific-detailed-unit storing unit 158, the unit detailing unit 159, and the quantitative-expression estimating unit 160 of the estimation device 250 according to the second embodiment are respectively the same as the communication unit 151, the quantitative-expression-language-model storing unit 152, the estimated-target-data acquiring unit 153, the quantitative-expression specifying unit 154, the numerical-value normalizing unit 155, the unit-normalization-information storing unit 156, the unit normalizing unit 157, the target-attribute-specific-detailed-unit storing unit 158, the unit detailing unit 159, and the quantitative-expression estimating unit 160 of the estimation device 150 according to the first embodiment.

However, the numerical-value normalizing unit 155 of the estimation device 250 according to the second embodiment gives a numerical-value normalization result to the numerical-value rounding unit 261. The unit normalizing unit 157 of the estimation device 250 according the second embodiment normalizes a numerical value in a numerical-value rounding result from the numerical-value rounding unit 261 instead of the numerical-value normalization result.

The numerical-value rounding unit 261 rounds the numerical values in the numerical-value normalization result from the numerical-value normalizing unit 155 to numerical values of a predetermined number of digits. In the second embodiment, the numerical-value rounding unit 261 rounds a numerical value of a predetermined number of digits to obtain a numerical value of predetermined decimal places.

In the second embodiment, the numerical-value rounding unit 261 rounds a numerical value of a predetermined number of digits to obtain a numerical value of predetermined decimal places, but the second embodiment is not limited to such an example. For example, the numerical-value rounding unit 261 may truncate numerical values to predetermined digits.

Then, the numerical-value rounding unit 261 gives the numerical-value rounding result including the numerical value rounded to the predetermined decimal places to the unit normalizing unit 157.

The numerical-value rounding unit 261 described above can also be implemented by, for example, a memory 10 and a processor 11 that executes programs stored in the memory 10, as illustrated in FIG. 26.

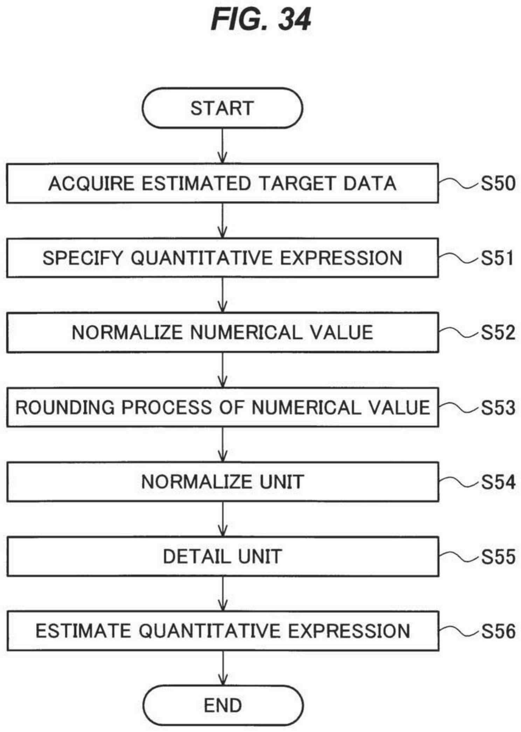

FIG. 34 is a flowchart illustrating the operation of the estimation device 250 according to the second embodiment.

First, the estimated-target-data acquiring unit 153 acquires estimated target data (step S50). The acquired estimated target data is given to the quantitative-expression specifying unit 154.

Next, the quantitative-expression specifying unit 154 analyzes the received estimated target data and specifies a quantitative expression (step S51). The quantitative-expression specification result indicating the specified quantitative expression is given to the numerical-value normalizing unit 155.

The numerical-value normalizing unit 155 normalizes the numerical value part of the quantitative expression by converting it into an exponential expression in the received quantitative-expression specifying result (step S52). The numerical-value normalization result indicating a normalized numerical value is given to the numerical-value rounding unit 261.

The numerical-value rounding unit 261 rounds a numerical value of a predetermined number of digits in the numerical-value normalization result to obtain a number of predetermined decimal places (step S53). A numerical-value rounding result indicating a numerical value of a limited number of digits is given to the unit normalizing unit 157.

The unit normalizing unit 157 refers to the unit normalization information stored in the unit-normalization-information storing unit 156 to normalize the unit and adjusts the exponent part of the exponential expression in accordance with the change of the unit in the received numerical-value rounding result (step S54). The unit normalization result indicating the normalized unit is given to the unit detailing unit 159.

The unit detailing unit 159 refers to the target-attribute-specific-detailed-unit information stored in the target-attribute-specific-detailed-unit storing unit 158 to detail the unit in the received unit normalization result (step S55). The unit conversion result indicating the detailed unit is given to the quantitative-expression estimating unit 160.

The quantitative-expression estimating unit 160 uses the received unit conversion result to perform estimation (step S56).

According to the second embodiment, the number of numerical values to be learned increases and allows the training of a more suitable quantitative-representation language model. Such a quantitative language model can be used to improve the estimation accuracy of quantitative expressions.

### THIRD EMBODIMENT

As illustrated in FIG. 1, a training and estimation system 300 according to the third embodiment includes a training device 310 and an estimation device 150.

The estimation device 150 of the training and estimation system 300 according to the third embodiment is the same as the estimation device 150 of the training and estimation system 100 according to the first embodiment.

As illustrated in FIG. 2, the training device 310 according to the third embodiment includes a training-source-data acquiring unit 111, a quantitative-expression specifying unit 112, a numerical-value normalizing unit 113, a unit-normalization-information storing unit 114, a unit normalizing unit 115, a target-attribute-specific-detailed-unit storing unit 116, a unit detailing unit 117, a quantitative-expression training unit 318, a quantitative-expression-language-model storing unit 119, and a communication unit 120.

The training-source-data acquiring unit 111, the quantitative-expression specifying unit 112, the numerical-value normalizing unit 113, the unit-normalization-information storing unit 114, the unit normalizing unit 115, the target-attribute-specific-detailed-unit storing unit 116, the unit detailing unit 117, the quantitative-expression-language-model storing unit 119, and the communication unit 120 of the training device 310 according to the third embodiment are respectively the same as the training-source-data acquiring unit 111, the quantitative-expression specifying unit 112, the numerical-value normalizing unit 113, the unit-normalization-information storing unit 114, the unit normalizing unit 115, the target-attribute-specific-detailed-unit storing unit 116, the unit detailing unit 117, the quantitative-expression-language-model storing unit 119, and the communication unit 120 of the training device 110 according to the first embodiment.

The quantitative-expression training unit 318 trains a quantitative-representation language model, which is a model for estimating quantitative expressions, by using a unit conversion result from the unit converting unit 141.

In the third embodiment, the quantitative-expression training unit 318 performs a mask process with an emphasis on learning quantitative expressions. For example, the quantitative-expression training unit 318 increases the probability of masking numerical values higher than the probability of masking other portions. Specifically, in Reference 1 below, training is performed while 80% of tokens in an input text are masked, 10% are replaced with random tokens, and 10% remained as original tokens. However, in the third embodiment, the quantitative-expression training unit 318 sets the probability of masking numerical values in an input text to 90% and the probability of masking portions other than the numerical values to 75%, to emphasize the learning of quantitative expressions. The ratio of the probability of masking numerical values and the probability of making portions other than numeric values can also be dynamically set in accordance with the percentage of tokens corresponding to the numerical values in the input text. For example, it is possible to make the probability of masking numerical values higher as the percentage of tokens corresponding to numerical values in the input text increases.

The quantitative-expression training unit 318 trains the quantitative-representation language model so that when an error occurs in the estimation of a normalized numerical value, the penalty is greater than when an error occurs in the estimation of other portions.

For example, the quantitative-expression training unit 318 performs an update process with an emphasis on numerical values in a parameter update process of the quantitative-representation language model. For example, the quantitative-expression training unit 318 updates the parameter by giving a greater penalty when exponents in exponential expressions are different.

The quantitative-expression training unit 318 can perform the parameter update process by using the ratio of a predicted numerical value to a correct numerical value before masking. For example, the quantitative-expression training unit 318 can update the parameters by applying a greater penalty as the ratio between the predicted numerical value and the correct numerical value before masking becomes larger.

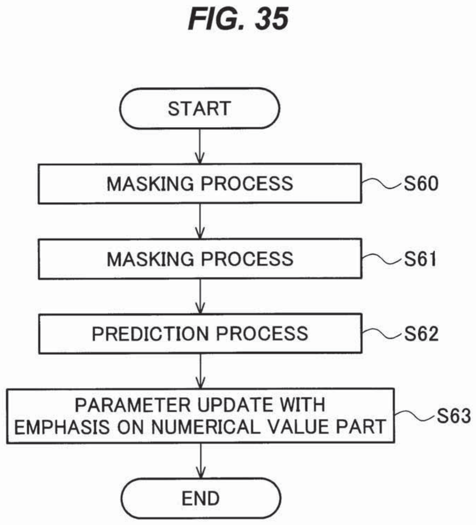

FIG. 35 is a flowchart illustrating the operation of the quantitative-expression training unit 318 according to the third embodiment.

First, the quantitative-expression training unit 318 extracts a text stored in a notation row in the unit conversion result as a target text (step S60).

Next, the quantitative-expression training unit 318 performs a masking process to mask a portion of the target text for which prediction is to be performed to generate a masked text (step S61). In third embodiment, the quantitative-expression training unit 318 increases the probability of masking numerical values higher than the probability of masking other portions in the mask process.

Next, the quantitative-expression training unit 318 performs a process of predicting the masked portion of the masked text with the quantitative-representation language model (step S62).

Next, the quantitative-expression training unit 318 detects the difference between the prediction result in step S62 and the correct answer obtained from the target text before masking, and performs a parameter update process of the quantitative-representation language model (step S63). Here, in the third embodiment, the quantitative-expression training unit 318 updates the parameters so that there is a greater penalty when the predicted exponents are different.

The quantitative-expression training unit 318 trains the quantitative-representation language model by performing the above process on all unit conversion results received from the unit detailing unit 117.

As described above, according to the third embodiment, optimization of the quantitative-representation language model with an emphasis on quantitative expressions in the training source data can be expected.

In the above-described first to third embodiments, the process executed by the erroneous-conversion suppressing unit 138 may not necessarily be performed.

In the above-described first to third embodiments, each process is explained using quantitative expressions in Japanese, but the first to third embodiments are not limited to such examples. For example, it is also possible to apply quantitative expressions in other languages such as English to the first to third embodiments. Even in such a case, the same effects as those described in the first to third embodiments are achieved.

Reference 1: Jacob Devlin, Ming-Wei Chang, Kenton Lee, and Kristina Toutanova, "BERT: Pre-training of Deep Bidirectional Transformers for Language Understanding", In Proceedings of the 2019 Conference of the North American Chapter of the Association for Computational Linguistics: Human Language Technologies, Volume 1 (Long and Short Papers), 2019.

### DESCRIPTION OF REFERENCE CHARACTERS

100, 200, 300 training and estimation system; 110, 210, 310 training device; 111 training-source-data acquiring unit; 112 quantitative-expression specifying unit; 113 numerical-value normalizing unit; 114 unit-normalization-information storing unit; 115 unit normalizing unit; 116 target-attribute-specific-detailed-unit storing unit; 117 unit detailing unit; 118, 318 quantitative-expression training unit; 119 quantitative-expression-language-model storing unit; 120 communication unit; 221 numerical-value rounding unit;130 attribute detecting unit; 131 proximity-attribute detecting unit; 132 modification-attribute detecting unit; 133 in-table-attribute detecting unit; 134 target detecting unit; 135 in-document-target detecting unit; 136 in-text-target detecting unit; 137 in-table-target detecting unit; 138 erroneous-conversion suppressing unit; 139 part-whole-relationship determining unit; 140 difference-expression determining unit; 141 unit converting unit; 150,250 estimation device; 151 communication unit; 152 quantitative-expression-language-model storing unit; 153 estimated-target-data acquiring unit; 154 quantitative-expression specifying unit; 155 numerical-value normalizing unit; 156 unit-normalization-information storing unit; 157 unit normalizing unit; 158 target-attribute-specific-detailed-unit storing unit; 159 unit detailing unit; 160 quantitative-expression estimating unit; 261 numerical-value rounding unit.

## Claims

1. A training device comprising;
a quantitative-expression specifying unit configured to specify a quantitative expression expressing a quantity using a numerical value and a unit from training source data;
a numerical-value normalizing unit configured to normalize the numerical value;
a unit normalizing unit configured to normalize the unit;
a unit detailing unit configured to specify a target being a physical entity and an attribute indicated by the numerical value and the unit in the training source data, and to convert the normalized unit into a detailed unit uniquely corresponding to a combination of the specified target, the specified attribute, and the normalized unit, the attribute being a property of the target; and
a quantitative-expression training unit configured to train a quantitative-representation language model for estimating the normalized numerical values by using data including the detailed unit and the normalized numerical value.

2. The training device according to claim 1, wherein the unit detailing unit is configured to refer to target-attribute-specific-detailed-unit information associating multiple targets, multiple attributes, multiple units, and multiple detailed units with each other, to specify the detailed unit that uniquely corresponds to a combination of the specified target, the specified attribute, and the normalized unit.

3. The training device according to claim 1 or 2, wherein when a predetermined first word is included in a proximity of the quantitative expression, the unit detailing unit is configured to specify the first word as the attribute.

4. The training device according to claim 1 or 2, wherein when a predetermined first word is included in a plurality of words in a modification relationship with the quantitative expression, the unit detailing unit is configured to specify the first word as the attribute.

5. The training device according to claim 1 or 2, wherein when the quantitative expression is included in a table in the training source data, and a predetermined first word is included in at least one of a row item name and a column item name of the table, the unit detailing unit is configured to specify the first word as the attribute.

6. The training device according to any one of claims 3 to 5, wherein the unit detailing unit is configured to specify the attribute after replacing a synonym of the first word with the first word.

7. The training device according to any one of claims 1 to 6, wherein when the training source data is document structure data including an item and a content corresponding to the item, the content includes a quantitative expression, and a title of the item includes a predetermined second word, the unit detailing unit is configured to specify the second word as the target.

8. The training device according to any one of claims 1 to 6, wherein when a predetermined second word is included in a proximity of the quantitative expression, the unit detailing unit is configured to specify the second word as the target.

9. The training device according to any one of claims 1 to 6, wherein when the quantitative expression is included in a table in the training source data, and a predetermined second word is included in at least one of a row item name and a column item name of the table, the unit detailing unit is configured to specify the second word as the target.

10. The training device according to any one of claims 7 to 9, wherein the unit detailing unit is configured to specify the target after replacing a synonym of the second word with the second word.

11. The training device according to any one of claims 7 to 10, wherein the unit detailing unit is configured not to convert the normalized unit into the detailed unit when a predetermined word indicating a portion of the specified target or a whole including the specified target is included in a proximity of the quantitative expression or included in a plurality of words in a modification relationship with the quantitative expression.

12. The training device according to any one of claims 7 to 11, wherein the unit detailing unit is configured not to convert the normalized unit into the detailed unit when a predetermined word indicating a difference is included in a proximity of the quantitative expression or in a plurality of words in a modification relationship with the quantitative expression.

13. The training device according to any one of claims 1 to 12, further comprising:
a numerical-value rounding unit configured to perform a numerical-value rounding process making a number of digits of the normalized numerical value a predetermined number of digits,
wherein the quantitative-expression training unit is configured to train the quantitative-representation language model by using the normalized numerical values after the numerical-value rounding process.

14. The training device according to any one of claims 1 to 13, wherein the quantitative-expression training unit is configured to train the quantitative-representation language model in such a manner that the probability of masking the normalized numerical value is higher than the probability of masking a portion other than the normalized numerical value.

15. The training device according to any one of claims 1 to 14, wherein the quantitative-expression training unit is configured to train the quantitative-representation language model in such a manner that when an error occurs in estimation of the normalized numerical value, penalty is greater than when an error occurs in estimation of a portion other than the normalized numerical value.

16. An estimation device comprising:
an estimated-target-data acquiring unit configured to acquire estimated target data requiring estimation of a numerical value at a position where a predetermined representation format is arranged by using the predetermined expression format and a unit;
a unit normalizing unit configured to normalize the unit;
a unit detailing unit configured to specify a target being a physical entity and an attribute indicated by the predetermined expression format and the unit in the estimated target data, and to convert the normalized unit into a detailed unit uniquely corresponding to a combination of the specified target, the specified attribute, and the normalized unit, the attribute being a property of the target; and
a quantitative-expression estimating unit configured to input data including the predetermined expression format and the converted detailed unit into a quantitative-representation language model trained by using data including the detailed unit and the normalized numerical value, to estimate the numerical value at the position where the predetermined expression format is positioned.

17. The estimation device according to claim 16, wherein the unit detailing unit is configured to refer to target-attribute-specific-detailed-unit information associating multiple targets, multiple attributes, multiple units, and multiple detailed units with each other, to specify the detailed unit that uniquely corresponds to a combination of the specified target, the specified attribute, and the normalized unit.

18. The estimation device according to claim 16 or 17, wherein when a predetermined first word is included in a proximity of the predetermined expression format and the unit, the unit detailing unit is configured to specify the first word as the attribute.

19. The estimation device according to claim 16 or 17, wherein when a predetermined first word is included in a plurality of words in a modification relationship with the predetermined expression format and the unit, the unit detailing unit is configured to specify the first word as the attribute.

20. The estimation device according to claim 18 or 19, wherein the unit detailing unit is configured to specify the attribute after replacing a synonym of the first word with the first word.

21. The estimation device according to any one of claims 16 to 20, wherein when a predetermined second word is included in a proximity of the predetermined expression format and the unit, the unit detailing unit is configured to specify the second word as the target.

22. The estimation device according to claim 21, wherein the unit detailing unit is configured to specify the target after replacing a synonym of the second word with the second word.

23. A program causing a computer to function as:
a quantitative-expression specifying unit configured to specify a quantitative expression expressing a quantity using a numerical value and a unit from training source data;
a numerical-value normalizing unit configured to normalize the numerical value;
a unit normalizing unit configured to normalize the unit;
a unit detailing unit configured to specify a target being a physical entity and an attribute indicated by the numerical value and the unit in the training source data, and to convert the normalized unit into a detailed unit uniquely corresponding to a combination of the specified target, the specified attribute, and the normalized unit, the attribute being a property of the target; and
a quantitative-expression training unit configured to train a quantitative-representation language model for estimating the normalized numerical values by using data including the detailed unit and the normalized numerical value.

24. A program causing a computer to function as:
an estimated-target-data acquiring unit configured to acquire estimated target data requiring estimation of a numerical value at a position where a predetermined representation format is arranged by using the predetermined expression format and a unit;
a unit normalizing unit configured to normalize the unit;
a unit detailing unit configured to specify a target being a physical entity and an attribute indicated by the predetermined expression format and the unit in the estimated target data, and to convert the normalized unit into a detailed unit uniquely corresponding to a combination of the specified target, the specified attribute, and the normalized unit, the attribute being a property of the target; and
a quantitative-expression estimating unit configured to input data including the predetermined expression format and the converted detailed unit into a quantitative-representation language model trained by using data including the detailed unit and the normalized numerical value.

25. A training method comprising:
specifying a quantitative expression expressing a quantity using a numerical value and a unit from training source data;
normalizing the numerical value;
normalizing the unit;
specifying a target being a physical entity and an attribute indicated by the numerical value and the unit in the training source data, and converting the normalized unit into a detailed unit uniquely corresponding to a combination of the specified target, the specified attribute, and the normalized unit, the attribute being a property of the target; and
training a quantitative-representation language model for estimating the normalized numerical values by using data including the detailed unit and the normalized numerical value.

26. An estimation method comprising:
acquiring estimated target data requiring estimation of a numerical value at a position where a predetermined representation format is arranged by using the predetermined expression format and a unit;
normalizing the unit;
specifying a target being a physical entity and an attribute indicated by the predetermined expression format and the unit in the estimated target data, and converting the normalized unit into a detailed unit uniquely corresponding to a combination of the specified target, the specified attribute, and the normalized unit, the attribute being a property of the target; and
inputting data including the predetermined expression format and the converted detailed unit into a quantitative-representation language model trained by using data including the detailed unit and the normalized numerical value, to estimate the numerical value at the position where the predetermined expression format is positioned.
